(19) Europäisches Patentamt
European Patent Office
Office européen des brevets

(11) EP 3 492 506 A1

(12) **EUROPEAN PATENT APPLICATION**
published in accordance with Art. 153(4) EPC

(43) Date of publication:
05.06.2019 Bulletin 2019/23

(51) Int Cl.:
*C08G 18/79* (2006.01)     *C08G 18/40* (2006.01)
*C08G 18/42* (2006.01)     *C08G 18/48* (2006.01)

(21) Application number: 17834396.8

(22) Date of filing: 26.07.2017

(86) International application number:
PCT/JP2017/027005

(87) International publication number:
WO 2018/021394 (01.02.2018 Gazette 2018/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 29.07.2016   JP 2016150786
30.03.2017   JP 2017066995

(71) Applicant: Mitsui Chemicals, Inc.
Minato-ku
Tokyo 105-7122 (JP)

(72) Inventors:
• NAKAGAWA, Toshihiko
Sodegaura-shi
Chiba 299-0265 (JP)
• YAMASHITA, Tatsuya
Sodegaura-shi
Chiba 299-0265 (JP)
• MORITA, Hirokazu
Sodegaura-shi
Chiba 299-0265 (JP)
• YAMASAKI, Satoshi
Sodegaura-shi
Chiba 299-0265 (JP)

(74) Representative: Hoffmann Eitle
Patent- und Rechtsanwälte PartmbB
Arabellastraße 30
81925 München (DE)

(54) **POLYURETHANE RESIN AND PRODUCTION METHOD THEREFOR**

(57)     In the polyurethane resin of a reaction product of a polyisocyanate component and a polyol component, the polyisocyanate component contains an aliphatic polyisocyanate derivative, the aliphatic polyisocyanate derivative has an isocyanurate group and an allophanate group, and an allophanate group content relative to 100 mol of the isocyanurate group of 10 mol or more and 90 mol or less, the polyol component contains polyoxyalkylene triol and/or polyestertriol with a hydroxyl number of 100 mgKOH/g or more and 600 mgKOH/g or less, and polyoxyalkylene diol and/or polyesterdiol with a hydroxyl number of 100 mgKOH/g or more and 300 mgKOH/g or less.

EP 3 492 506 A1

**Description**

**TECHNICAL FIELD**

The present invention relates to polyurethane resin and a production method thereof.

**BACKGROUND ART**

Conventionally, polyurethane resin is produced by the reaction of a polyisocyanate component with a polyol component, and has been widely used in various industrial fields. Meanwhile, light transmissivity (transparency) may be required for polyurethane resin depending on its use in view of design.

Thus, polyurethane resin having light transmissivity (transparency) has been examined, and for example, an optical polyurethane resin produced by allowing a polyisocyanate component including a modified aliphatic polyisocyanate to react with a polyol component having an average hydroxyl number of 280 to 1240 mgKOH/g and an average functionality of more than 2 and less than 5 in the presence of a bismuth-based catalyst has been proposed.

To be more specific, Patent Document 1 has proposed an optical polyurethane resin produced by allowing a mixture of hexamethylene diisocyanate trimer (isocyanurate modified product) and allophanate-modified hexamethylene diisocyanate to react with polyetherpolyol produced by using sorbitol and glycerine as an initiator and having an average functionality of 3.8 and an average hydroxyl number of 550 mgKOH/g in the presence of bismuth octylate (for example, see Example 11).

Citation List

Patent Document

Patent Document 1:
Japanese Unexamined Patent Publication No. 2011-12141

**SUMMARY OF THE INVENTION**

**PROBLEM TO BE SOLVED BY THE INVENTION**

Meanwhile, as described in Patent Document 1, when a mixture of trimer and allophanate-modified product is used, with an excessively high allophanate-modified content, sufficient light transmissivity or durability (evaluated by, for example, changes in haze before and after moist and heat resistant test) may not be obtained.

For the polyurethane resin with light transmissivity, mechanical strength (evaluated by, for example, hardness) may be required depending on its use.

An object of the present invention is to provide polyurethane resin with excellent light transmissivity, and furthermore, excellent durability and mechanical strength; and a production method thereof.

**MEANS FOR SOLVING THE PROBLEM**

The present invention [1] includes a polyurethane resin, which is a reaction product of a polyisocyanate component and a polyol component,
wherein the polyisocyanate component contains an aliphatic polyisocyanate derivative, the aliphatic polyisocyanate derivative has an isocyanurate group and an allophanate group, and an allophanate group content relative to 100 mol of the isocyanurate group of 10 mol or more and 90 mol or less,
the polyol component contains triol with a hydroxyl number of 100 mgKOH/g or more and 600 mgKOH/g or less and diol with a hydroxyl number of 100 mgKOH/g or more and 300 mgKOH/g or less, the triol is polyoxyalkylene triol having an oxyalkylene group with carbon atoms of 2 to 3, and/or polyestertriol that is a reaction product of polybasic acid and/or its alkylester, and polyhydric alcohol, the diol is polyoxyalkylene diol having an oxyalkylene group with carbon atoms of 2 to 3, and/or polyesterdiol that is a reaction product of polybasic acid and/or its alkylester, and polyhydric alcohol.

The present invention [2] includes the polyurethane resin described in [1] above, wherein the aliphatic polyisocyanate includes pentamethylene diisocyanate.

The present invention [3] includes the polyurethane resin described in [1] or [2] above, wherein the polyol component has an average functionality of 2.1 or more and 2.9 or less.

The present invention [4] includes the polyurethane resin of any one of the above-described [1] to [3], wherein relative to a total amount of the polyol component, a total of the polyesterdiol content and the polyestertriol content is 5 equivalent% or more and 70 equivalent% or less.

The present invention [5] includes a method for producing polyurethane resin, the method including the steps of: allowing a polyisocyanate component to react with a polyol component, wherein the polyisocyanate component contains an aliphatic polyisocyanate derivative, the aliphatic polyisocyanate derivative has an isocyanurate group and an allophanate group, and an allophanate group content relative to 100 mol of the isocyanurate group of 10 mol or more and 90 mol or less; the polyol component contains triol with a hydroxyl number of 100 mgKOH/g or more and 600 mgKOH/g or less and diol with a hydroxyl number of 100 mgKOH/g or more and 300 mgKOH/g or less, the triol is polyoxyalkylene triol having an oxyalkylene group with carbon atoms of 2 to 3, and/or polyestertriol that is a reaction product of polybasic acid and/or its alkylester, and polyhydric alcohol, the diol is polyoxyalkylene diol having an oxyalkylene group with carbon atoms of 2 to 3, and/or polyesterdiol that is a reaction product of polybasic acid and/or its alkylester, and polyhydric alcohol; and the equivalent ratio (NCO/OH) of the isocyanate group of the polyisocyanate component relative to the hydroxyl group of the polyol component is 0.9 or more and 1.1 or less.

Effects of the Invention

In the polyurethane resin of the present invention, aliphatic polyisocyanate derivative containing the isocyanurate group and the allophanate group at a specific ratio is used, and the polyol component contains a specific triol and a specific diol at a specific ratio, and therefore the polyurethane resin of the present invention has excellent light transmissivity, and furthermore, excellent durability and mechanical strength.

The method for producing polyurethane resin of the present invention allows for efficient production of polyurethane resin with excellent light transmissivity, and furthermore, excellent durability and mechanical strength.

**BRIEF DESCRIPTION OF THE DRAWINGS**

FIG. 1 is a graph illustrating relationship between the ratio of the allophanate group to the isocyanurate group, haze (light transmissivity), and hardness (mechanical strength).
FIG. 2 is a graph illustrating relationship between ratio of the allophanate group to the isocyanurate group, and haze after moist and heat resistant test (light transmissivity).
FIG. 3 is a graph illustrating relationship between ratio of the allophanate group to the isocyanurate group, changes in haze (light transmissivity) before and after moist and heat resistant test.

Description of the embodiments

The polyurethane resin of the present invention is a reaction product of a polyisocyanate component and a polyol component.

The polyisocyanate component contains an aliphatic polyisocyanate derivative.

Examples of the aliphatic polyisocyanate include aliphatic diisocyanates such as ethylenediisocyanate, trimethylenediisocyanate, 1,2-propylenediisocyanate, butylenediisocyanate (tetramethylenediisocyanate, 1,2-butylenediisocyanate, 2,3-butylenediisocyanate, 1,3-butylenediisocyanate), 1,5-pentamethylene diisocyanate (PDI), 1,6-hexamethylene diisocyanate (HDI), 2,4,4- or 2,2,4-trimethylhexamethylene diisocyanate, 2,6-diisocyanatemethylcaproate, and dodecamethylenediisocyanate.

These aliphatic polyisocyanates can be used singly, or can be used in combination of two or more.

For the aliphatic polyisocyanate, in view of ease in availability, preferably 1,5-pentamethylene diisocyanate (PDI) and 1,6-hexamethylene diisocyanate (HDI) are used, more preferably 1,5-pentamethylene diisocyanate (PDI) is used.

To be more specific, 1,5-pentamethylene diisocyanate (PDI) has low crystallinity because of its asymmetric structure due to odd methylene chain compared with 1,6-hexamethylene diisocyanate (HDI), and also can improve crosslinking density of polyurethane resin. Therefore, by using 1,5-pentamethylene diisocyanate (PDI) as the aliphatic polyisocyanate, light transmissivity, durability, and mechanical strength of polyurethane resin can be improved.

The aliphatic polyisocyanate does not include an alicyclic polyisocyanate containing an alicyclic ring (described later).

The aliphatic polyisocyanate derivative contains an isocyanurate group and an allophanate group.

That is, in the present invention, the aliphatic polyisocyanate derivative is an aliphatic polyisocyanate derivative composition, contains mainly isocyanurate derivative of aliphatic polyisocyanate, and furthermore, contains an allophanate-modified isocyanurate derivative of aliphatic polyisocyanate that is a reaction product of the isocyanurate derivative of aliphatic polyisocyanate and alcohol (described later), and in some cases, contains an allophanate derivative of aliphatic polyisocyanate that is a reaction product of (unreacted) aliphatic polyisocyanate and alcohol (described later).

In such an aliphatic polyisocyanate derivative, the isocyanurate group content and allophanate group content (molar ratio) are adjusted to be in a predetermined range in view of light transmissivity, durability, and mechanical strength.

To be specific, the aliphatic polyisocyanate derivative has an allophanate group content relative to 100 mol of the isocyanurate group of, 10 mol or more, preferably 12 mol or more, more preferably 20 mol or more, even more preferably 30 mol or more, particularly preferably 40 mol or more, and 90 mol or less, preferably 80 mol or less, more preferably 70 mol or less, even more preferably 60 mol or less.

When the allophanate group content is below the above-described lower limit, in the production of the aliphatic polyisocyanate derivative described later, when monohydric alcohol is used, the trifunctional isocyanurate group is excessive relative to the bifunctional allophanate group, and therefore causes a high crosslinking density and reduces light transmissivity of polyurethane resin.

In contrast, when the allophanate group content is more than the above-described upper limit, in the production of the aliphatic polyisocyanate derivative described later, when monohydric alcohol is used, the allophanate group is excessive relative to the isocyanurate group, and therefore causes a low crosslinking density, reduces mechanical strength (hardness, etc.) of polyurethane resin and causes poor durability.

Meanwhile, when the allophanate group content is in the above-described range, the crosslinking density can be adjusted suitably, and therefore polyurethane resin with excellent light transmissivity, durability, and mechanical strength can be produced.

The aliphatic polyisocyanate derivative has an allophanate group content relative to 100 mol of a total amount of the isocyanurate group and the allophanate group of, for example, 9 mol or more, preferably 11 mol or more, more preferably 17 mol or more, even more preferably 23 mol or more, particularly preferably 29 mol or more, and for example, 47 mol or less, preferably 44 mol or less, more preferably 41 mol or less, even more preferably 38 mol or less.

The aliphatic polyisocyanate derivative has an isocyanurate group content relative to 100 mol of a total amount of the isocyanurate group and the allophanate group of, for example, 53 mol or more, preferably 56 mol or more, more preferably 59 mol or more, even more preferably 62 mol or more, and for example, 91 mol or less, preferably 89 mol or less, more preferably 83 mol or less, even more preferably 77 mol or less, particularly preferably 71 mol or less.

The isocyanurate group content and allophanate group content can be calculated from the mole ratio of allophanate group and the isocyanurate group in the aliphatic polyisocyanate derivative obtained from an NMR chart measured based on $^{13}$C-NMR method in accordance with Examples described later.

To produce such an aliphatic polyisocyanate derivative, for example, first, the above-described aliphatic polyisocyanate and alcohol are subjected to urethane-forming reaction, and then subjected to isocyanurate-forming reaction in the presence of an isocyanurate-forming catalyst, or for example, first, the aliphatic polyisocyanate is subjected to isocyanurate-formation, and then alcohol is blended to be subjected to urethane-forming reaction.

Preferably, first, the above-described aliphatic polyisocyanate and alcohol are subjected to urethane-forming reaction, and then subjected to isocyanurate-forming reaction in the presence of an isocyanurate-forming catalyst.

Examples of the alcohol include monohydric alcohol and dihydric alcohol.

Examples of the monohydric alcohol include straight chain monohydric alcohol and branched monohydric alcohol.

Examples of the straight chain monohydric alcohol include C 1 to 20 (number of carbon atoms, the same applies in the following) straight chain monohydric alcohol such as methanol, ethanol, n-propanol, n-butanol, n-pentanol, n-hexanol, n-heptanol, n-octanol, n-nonanol, n-decanol, n-undecanol, n-dodecanol (lauryl alcohol), n-tridecanol, n-tetradecanol, n-pentadecanol, n-hexadecanol, n-heptadecanol, n-octadecanol (stearyl alcohol), n-nonadecanol, and eicosanol.

Examples of the branched monohydric alcohol include C3 to 20 branched monohydric alcohol such as isopropanol, isobutanol (isobutyl alcohol), sec-butanol, tert-butanol, isopentanol, isohexanol, isoheptanol, isooctanol, 2-ethylhexane-1-ol, isononanol, isodecanol, 5-ethyl-2-nonanol, trimethylnonylalcohol, 2-hexyldecanol, 3,9-diethyl-6-tridecanol, 2-isoheptyl isoundecanol, 2-octyldodecanol, and other branched alkanol (C5 to 20).

Examples of the dihydric alcohol include the following C2 to 20 dihydric alcohols: straight chain dihydric alcohol such as ethylene glycol, 1,3-propane diol, 1,4-butane diol (1,4-butyleneglycol), 1,5-pentane diol, 1,6-hexane diol, 1,4-dihydroxy-2-butene, diethylene glycol, triethylene glycol, dipropylene glycol, and other straight chain alkanes (C7 to 20)diol; branched dihydric alcohol such as 1,2-propane diol, 1,3-butane diol (1,3-butyleneglycol), 1,2-butane diol (1,2-butyleneglycol), neopentyl glycol, 3-methyl-1,5-pentane diol, 2,2,2-trimethylpentane diol, 3,3-dimethylolheptane, 2,6-dimethyl-1-octene-3,8-diol, and other branched alkane (C7 to 20)diol; 1,3- or 1,4-cyclohexanedimethanol and a mixture thereof, 1,3- or 1,4-cyclohexane diol and a mixture thereof, hydrogenated bisphenol A, and bisphenol A.

These alcohols can be used singly, or can be used in combination of two or more.

For the alcohol, in view of achieving a low viscosity aliphatic polyisocyanate derivative, preferably, monohydric alcohol, more preferably, C1 to 20 straight chain monohydric alcohol, and C3 to 20 branched monohydric alcohol are used. Even more preferably, C3 to 20 branched monohydric alcohol is used, particularly preferably, isobutyl alcohol is used.

With a low viscosity aliphatic polyisocyanate derivative, improvement in compatibility with polyol component can be achieved, and light transmissivity of polyurethane resin can be achieved.

The alcohol is blended in an amount of, relative to 100 parts by mass of aliphatic polyisocyanate, for example, 0.05 parts by mass or more, preferably 0.1 parts by mass or more, more preferably 0.2 parts by mass or more, even more preferably more than 0.5 parts by mass, and for example, 4.0 parts by mass or less, preferably 2.5 parts by mass or less, more preferably 1.5 parts by mass or less.

When the mixing ratio of the alcohol is within the above-described range, the allophanate-modified isocyanurate derivative and/or allophanate derivative contents (that is, allophanate group content in aliphatic polyisocyanate derivative) relative to the isocyanurate derivative of aliphatic polyisocyanate in the aliphatic polyisocyanate can be adjusted.

Examples of the urethane-forming reaction conditions include, under inert gas atmosphere such as nitrogen gas, and under normal pressure (atmospheric pressure), the reaction temperature of, for example, room temperature (for example, 25°C) or more, preferably 40°C or more, and for example, 100°C or less, preferably 90°C or less. The reaction time is, for example, 0.5 hours or more, preferably 1 hour or more, and for example, 10 hours or less, preferably 6 hours or less, more preferably 3 hours or less.

In the above-described urethane-forming reaction, a known urethane-forming catalyst (for example, amines (described later), organometallic compound (described later), etc.) can be blended. The mixing ratio of the urethane-forming catalyst is not particularly limited, and is set suitably in accordance with purpose and use.

In this manner, a partially urethane modified aliphatic polyisocyanate (that is, aliphatic polyisocyanate composition including urethane modified aliphatic polyisocyanate and (unreacted) aliphatic polyisocyanate) can be produced.

Then, the partially urethane-modified aliphatic polyisocyanate is subjected to isocyanurate-forming reaction in the presence of an isocyanurate-forming catalyst.

Examples of the isocyanurate-forming catalyst include hydroxides or organic weak acid salts of tetraalkylammonium such as tetramethylammonium, tetraethylammonium, tetrabutylammonium, trimethylbenzylammonium, and tributylbenzylammonium; hydroxides or organic weak acids (for example, N-(2-hydroxypropyl)-N,N,N-trimethylammonium-2-ethylhexanoate, etc.) of trialkylhydroxyalkylammonium such as trimethylhydroxypropylammonium (also called: N-(2-hydroxypropyl)-N,N,N-trimethylammonium), trimethylhydroxyethylammonium, triethylhydroxypropylammonium, and triethylhydroxyethylammonium; metal salts (for example, alkali metal salts, magnesium salts, tin salts, zinc salts, lead salts, etc.) of alkylcarboxylic acid such as acetic acid, caproic acid, octylic acid, myristic acid, and naphthenic acid; metal chelate compounds of β-diketone such as aluminumacetylacetone and lithium acetylacetonate; Friedel-Crafts catalysts such as aluminum chloride and boron trifluoride; various organometallic compounds such as titaniumtetrabutyrate, and tributylantimony oxide; and aminosilyl group-containing compounds such as hexamethylsilazane.

These isocyanurate-forming catalysts can be used singly, or can be used in combination of two or more.

For the isocyanurate-forming catalyst, preferably, organic salt of weak acid of trialkylhydroxyalkylammonium, more preferably, N-(2-hydroxypropyl)-N,N,N-trimethylammonium-2-ethylhexanoate is used.

The mixing ratio of the isocyanurate-forming catalyst (based on active component 100%) relative to 100 parts by mass of aliphatic polyisocyanate is, for example, 0.001 parts by mass or more, preferably 0.003 parts by mass or more, and for example, 0.1 parts by mass or less, preferably 0.05 parts by mass or less.

Examples of the reaction conditions for the isocyanurate-forming reaction include, under inert gas atmosphere such as nitrogen gas and normal pressure (atmospheric pressure), the reaction temperature of, for example, 50°C or more, preferably 70°C or more, more preferably 80°C or more, and for example, 120°C or less, preferably 100°C or less. The reaction time is, for example, 5 minutes or more, preferably 10 minutes or more, more preferably 15 minutes or more, and for example, 120 minutes or less, preferably 60 minutes or less.

In the above-described isocyanurate-forming reaction, when a predetermined reaction rate (isocyanate group conversion rate) is reached, a reaction inhibitor such as phosphoric acid, monochloroacetic acid, benzoyl chloride, dodecylbenzenesulfonic acid, toluenesulfonic acid (o- or p-toluenesulfonic acid) and their derivatives (for example, o- or p-toluenesulfonic acid methyl, etc.), and toluenesulfonamide (o- or p-toluenesulfonamide) is added to the reaction solution to deactivate the catalyst to terminate the isocyanurate-forming reaction. In this case, the isocyanurate-forming reaction can also be terminated by adding an adsorbent that adsorbs the catalyst such as chelate resin and ion exchange resin.

The conversion rate of the isocyanate group at the time of terminating the isocyanurate-forming reaction is, for example, 1 mass% or more, preferably 5 mass% or more, and for example, 20 mass% or less, preferably 15 mass% or less.

The isocyanate group conversion rate can be measured based on, for example, high-performance GPC, NMR, isocyanate group concentration, refraction, density, and infrared spectrum.

In this manner, the aliphatic polyisocyanate can be subjected to isocyanurate-forming reaction.

In the isocyanurate-forming reaction, the partially urethane-modified aliphatic polyisocyanate is subjected to isocyanurate-formation, and therefore along with the above-described isocyanurate derivative, an allophanate-modified isocyanurate derivative is also produced.

In the above-described isocyanurate-forming reaction, to adjust the isocyanurate-formation, for example, organic phosphite described in Japanese Unexamined Patent Publication No.S61-129173 can be blended as a promoter.

Examples of the organic phosphite include organic phosphorous acid diester and organic phosphorous acid triester. To be more specific, monophosphites such as triethylphosphite, tributylphosphite, tridecylphosphite, tris(tridecyl)phosphite, triphenylphosphite, tris(nonylphenyl)phosphite, tris(2,4-di-t-butylphenyl)phosphite, and diphenyl(tridecyl)phosphite; and di, tri, or tetra phosphites derived from polyhydric alcohols such as distearyl • pentaerythrityl • diphosphite, tripentaerythritol • triphosphite, and tetraphenyl • dipropylene glycol • diphosphite are used.

These organic phosphites can be used singly, or can be used in combination of two or more.

For the organic phosphite, preferably, monophosphites are used, more preferably, tridecylphosphite and tris(tridecyl)phosphite are used.

The organic phosphite is blended in an amount of, relative to 100 parts by mass of aliphatic polyisocyanate, for example, 0.01 parts by mass or more, preferably 0.05 parts by mass or more, more preferably 0.10 parts by mass or more, and for example, 1.0 parts by mass or less, preferably 0.50 parts by mass or less.

In the above-described isocyanurate-forming reaction, as necessary, reaction stabilizers such as hindered phenol antioxidant, for example, 2,6-di(tert-butyl)-4-methylphenol (BHT), IRGANOX1010, IRGANOX1076, IRGANOX1135, and IRGANOX245 (all manufactured by BASF Japan, trade name) can also be blended.

The reaction stabilizer is blended in an amount of, relative to 100 parts by mass of aliphatic polyisocyanate, for example, 0.01 parts by mass or more, preferably 0.05 parts by mass or more, and for example, 1.0 parts by mass or less, preferably 0.10 parts by mass or less.

The above-described promoter and reaction stabilizer can be added at the time of the above-described urethane-forming reaction.

In the above-described isocyanurate-forming reaction, as necessary, a known reaction solvent can be blended.

Then, after completion of reaction, unreacted aliphatic polyisocyanate (including catalyst, reaction solvent and/or catalyst inactivator when catalyst, reaction solvent and/or catalyst inactivator are blended,) can be removed from the produced reaction mixture liquid by a known method such as distillation including thin-film distillation (Smith distillation), and extraction, thereby producing an aliphatic polyisocyanate derivative.

After the removal of the unreacted aliphatic polyisocyanate, the above-described reaction inhibitor can be added as a stabilizer at an arbitrary ratio to the produced aliphatic polyisocyanate derivative.

In this manner, an aliphatic polyisocyanate derivative is produced.

The produced aliphatic polyisocyanate derivative contains the isocyanurate group and the allophanate group, and the isocyanurate group and allophanate group contents are adjusted within the above-described range. Therefore, with the aliphatic polyisocyanate derivative, light transmissivity, durability, and mechanical strength can be improved.

The production method of the aliphatic polyisocyanate derivative is not limited to the above-described, as long as the isocyanurate group content and allophanate group content are adjusted within the above-described range. For example, two or more differently formulated aliphatic polyisocyanate derivatives can be blended to prepare the aliphatic polyisocyanate derivative.

To be more specific, an isocyanurate-and-allophanate group-containing aliphatic polyisocyanate derivative (derivative composition) can be produced by, for example, separately preparing an isocyanurate derivative of aliphatic polyisocyanate and an allophanate derivative of aliphatic polyisocyanate, and mixing them.

The isocyanurate derivative of aliphatic polyisocyanate is a derivative containing an isocyanurate group, and contains no allophanate group or a trace amount of (described later) allophanate group.

The isocyanurate derivative of aliphatic polyisocyanate containing no allophanate group can be produced by, for example, blending no alcohol in the above-described isocyanurate-forming reaction, subjecting aliphatic polyisocyanate to isocyanurate-forming reaction in the presence of an isocyanurate-forming catalyst. The reaction conditions in the isocyanurate-forming reaction are the same as described above.

However, the isocyanurate group is easily formed by going through urethane-forming reaction. Therefore, by blending a trace amount of alcohol, isocyanurate-forming reaction can be accelerated. In such a case, isocyanurate derivative of aliphatic polyisocyanate containing a trace amount of allophanate group is produced.

In the above-described method (method in which, first, the above-described aliphatic polyisocyanate and alcohol are subjected to urethane-forming reaction, and then subjected to isocyanurate-forming reaction in the presence of an isocyanurate-forming catalyst) for producing the isocyanurate derivative of aliphatic polyisocyanate containing a trace amount of allophanate group, for example, the amount of alcohol blended is set to be relatively low.

In this case, alcohol is blended in an amount of, relative to 100 parts by mass of aliphatic polyisocyanate, for example, 0.01 parts by mass or more, preferably 0.05 parts by mass or more, and for example, 0.5 parts by mass or less, preferably 0.3 parts by mass or less.

In this manner, the amount of allophanate group production in reaction between aliphatic polyisocyanate and alcohol can be suppressed.

Then, the produced reaction product is subjected to isocyanurate-forming reaction in the presence of an isocyanurate-forming catalyst. The reaction conditions in the isocyanurate-forming reaction are the same as described above.

In the isocyanurate derivative of aliphatic polyisocyanate, the allophanate group content relative to 100 mol of the isocyanurate group is, for example, less than 10 mol, preferably 8 mol or less, more preferably 7 mol or less, and generally 0 mol or more.

The allophanate derivative of aliphatic polyisocyanate is a derivative containing an allophanate group, and containing no isocyanurate group, or containing a trace amount of (described later) isocyanurate group.

The allophanate derivative of aliphatic polyisocyanate can be produced by, for example, allowing the above-described aliphatic polyisocyanate to react with the above-described monohydric alcohol, and then subjecting the product to allophanate-formation reaction in the presence of allophanate-formation catalyst.

Examples of the monohydric alcohol include the above-described monohydric alcohols (monohydric alcohol in isocyanurate-formation), and they can be used singly, or can be used in combination of two or more. For the monohydric alcohol, preferably, branched monohydric alcohol is used, more preferably, isobutanol (also called: isobutyl alcohol) is used.

When the allophanate derivative of aliphatic polyisocyanate is produced, the mixing ratio of alcohol relative to 100 parts by mass of aliphatic polyisocyanate is, for example, more than 3 parts by mass, preferably 3.2 parts by mass or more, more preferably 3.5 parts by mass or more, and for example, 50 parts by mass or less, preferably 20 parts by mass or less, more preferably 10 parts by mass or less.

In this reaction, in the range that does not hinder the excellent effects of the present invention, as necessary, the above-described monohydric alcohol can be used in combination with an active hydrogen group-containing compound such as thiols, oximes, lactams, phenols, and $\beta$ diketones.

Examples of the reaction conditions in reaction between aliphatic polyisocyanate and alcohol include, under inert gas atmosphere such as nitrogen gas and normal pressure (atmospheric pressure), the reaction temperature of, for example, room temperature (for example, 25°C) or more, preferably 40°C or more, and for example, 100°C or less, preferably 90°C or less. The reaction time is, for example, 0.05 hours or more, preferably 0.2 hours or more, and for example, 10 hours or less, preferably 6 hours or less.

In this manner, aliphatic polyisocyanate and alcohol can be subjected to urethane-forming reaction.

In the above-described urethane-forming reaction, as necessary, a known urethane-forming catalyst (for example, amines (described later), organometallic compound (described later), etc.) can be blended. The mixing ratio of the urethane-forming catalyst is not particularly limited, and is set suitably in accordance with purpose and use.

In this method, an allophanate-formation catalyst is blended to the reaction solution, and the reaction product of the aliphatic polyisocyanate and alcohol are subjected to allophanate-formation reaction.

Examples of the allophanate-formation catalyst include bismuth salt of organic carboxylic acid such as bismuth octylate, and lead salt of organic carboxylic acid such as lead octanoate.

These allophanate-formation catalysts can be used singly, or can be used in combination of two or more.

For the allophanate-formation catalyst, preferably, lead salt of organic carboxylic acid is used, more preferably, lead octanoate is used.

The amount of the allophanate-formation catalyst added relative to 100 parts by mass of aliphatic polyisocyanate is, for example, 0.001 parts by mass or more, preferably 0.002 parts by mass or more, more preferably 0.01 parts by mass or more, and for example, 0.3 parts by mass or less, preferably 0.05 parts by mass or less, more preferably 0.03 parts by mass or less.

Examples of the allophanate-formation reaction conditions include, under inert gas atmosphere such as nitrogen gas, normal pressure (atmospheric pressure), the reaction temperature of, 0°C or more, preferably 20°C or more, and for example, 160°C or less, preferably 120°C or less. The reaction time is, for example, 30 minutes or more, preferably 60 minutes or more, and for example, 1200 minutes or less, preferably 600 minutes or less.

In the above-described allophanate-formation reaction, at the time when a predetermined reaction rate (isocyanate group conversion rate) is reached, a reaction inhibitor is added to the reaction solution, and the catalyst is deactivated to terminate the allophanate-formation reaction. In this case, an adsorbent that adsorbs the catalyst such as chelate resin and ion exchange resin can be added to terminate the allophanate-formation reaction. Examples of the reaction inhibitor that terminates the allophanate-formation reaction include those reaction inhibitor that terminates the isocyanurate-forming reaction.

The isocyanate group conversion rate at the time of terminating the allophanate-formation reaction is, for example, 1 mass% or more, preferably 5 mass% or more, and for example, 20 mass% or less, preferably 15 mass% or less.

The isocyanate group conversion rate can be measured based on, for example, high performance GPC, NMR, isocyanate group concentration, refraction, density, and infrared spectrum.

In this manner, the aliphatic polyisocyanate can be subjected to allophanate-formation reaction.

In the above-described reaction, to adjust urethane-formation and allophanate-formation, for example, the above-described organic phosphite can be blended as a promoter. Organic phosphites can be used singly, or can be used in combination of two or more. For the organic phosphite, preferably, monophosphites, more preferably, tris(tridecyl)phosphite is used.

The organic phosphite is added in an amount of, relative to 100 parts by mass of aliphatic polyisocyanate, for example, 0.01 parts by mass or more, preferably 0.02 parts by mass or more, more preferably 0.03 parts by mass or more, and for example, 0.2 parts by mass or less, preferably 0.15 parts by mass or less, more preferably 0.1 parts by mass or less.

The above-described promoter and reaction stabilizer can be added at the time of the above-described urethane-forming reaction.

In the above-described isocyanurate-forming reaction, as necessary, a known reaction solvent can be blended.

Then, after the completion of the reaction, from the produced reaction mixture liquid, unreacted aliphatic polyisocyanate (including catalyst, reaction solvent and/or catalyst inactivator when catalyst, reaction solvent and/or catalyst inactivator are blended) is removed by a known method such as distillation including thin-film distillation (Smith distillation) and extraction, to produce allophanate derivative of aliphatic polyisocyanate. After the removal of the unreacted aliphatic polyisocyanate, the above-described reaction inhibitor can be added at an arbitrary amount as a stabilizer to the produced allophanate derivative of aliphatic polyisocyanate.

In the allophanate derivative of aliphatic polyisocyanate, the allophanate group content relative to 100 mol of the isocyanurate group is, 3000 mol or more, preferably 3500 mol or more, more preferably 4000 mol or more, and generally 100000 mol or less.

Then, by mixing the above-described isocyanurate derivative of aliphatic polyisocyanate and the above-described allophanate derivative of aliphatic polyisocyanate by a known method, their mixture (composition), i.e., an aliphatic polyisocyanate derivative having an isocyanurate group and an allophanate group can be produced.

The isocyanurate derivative of aliphatic polyisocyanate and the allophanate derivative of aliphatic polyisocyanate are mixed at a ratio such that the ratio of the allophanate group and the ratio of the isocyanurate group in the produced mixture are within the above-described predetermined range.

To be specific, relative to 100 parts by mass of a total amount of the isocyanurate derivative of aliphatic polyisocyanate and the allophanate derivative of aliphatic polyisocyanate, the isocyanurate derivative of aliphatic polyisocyanate is, for example, 50 parts by mass or more, preferably 60 parts by mass or more, more preferably 80 parts by mass or more, and for example, 96 parts by mass or less, preferably 90 parts by mass or less. The allophanate derivative of aliphatic polyisocyanate is, for example, 4 parts by mass or more, preferably 10 parts by mass or more, and for example, 50 parts by mass or less, preferably 40 parts by mass or less, more preferably 20 parts by mass or less.

The aliphatic polyisocyanate derivative (derivative composition) may contain the unreacted aliphatic polyisocyanate monomer relative to 100 parts by mass of the aliphatic polyisocyanate derivative of, for example, 1.0 parts by mass or less, preferably 0.5 parts by mass or less.

The aliphatic polyisocyanate derivative can contain, for example, a derivative (in the following, referred to as other derivatives) other than the isocyanurate derivative and allophanate derivative of aliphatic polyisocyanate.

Examples of the other derivative include biuret derivatives (for example, biuret derivatives produced by reaction of the above-described aliphatic polyisocyanate, water, and amines), urea derivatives (for example, urea derivatives produced by reaction of the above-described aliphatic polyisocyanate and diamine), oxadiazinetrione derivatives (for example, oxadiazinetrione derivatives produced by reaction of the above-described aliphatic polyisocyanate and carbon dioxide), carbodiimide derivatives (carbodiimide derivatives produced by decarboxylation condensation reaction of the above-described aliphatic polyisocyanate), polyol derivatives (for example, polyol derivative (alcohol adduct) produced by reaction of the above-described aliphatic polyisocyanate and low molecular-weight polyol described later (preferably, low molecular-weight triol described later), polyol derivative produced by reaction of the above-described aliphatic polyisocyanate, and low molecular-weight polyol and/or high molecular weight polyol described later (preferably, high molecular weight polyol described later)), iminooxadiazinedione derivative of aliphatic polyisocyanate, and uretdione derivative of aliphatic polyisocyanate.

These other derivatives can be used singly, or can be used in combination of two or more.

For the other derivative, in view of light transmissivity, preferably, biuret derivative of aliphatic polyisocyanate is used.

The other derivative can be contained by any embodiment without particular limitation, and for example, the other derivatives may be produced as by-products in the above-described reaction (urethane-forming reaction, isocyanurate-forming reaction, allophanate-formation reaction, etc.), and can be contained in the aliphatic polyisocyanate derivative. For example, a separately prepared other derivative may be added to the polyisocyanate derivative.

The other derivative content is not particularly limited as long as the ratio of the allophanate group and the ratio of the isocyanurate group in the aliphatic polyisocyanate derivative (derivative composition) are adjusted to be in the above-described range. Their contents relative to 100 parts by mass of a total amount of aliphatic polyisocyanate derivative are, for example, 1 part by mass or more, preferably 5 parts by mass or more, and for example, 50 parts by mass or less, preferably 40 parts by mass or less.

The polyisocyanate component can contain the aliphatic polyisocyanate derivative singly, and furthermore, in addition to the aliphatic polyisocyanate derivative, other polyisocyanate and/or derivatives can be contained.

Examples of the other polyisocyanate and/or their derivatives include a polyisocyanate monomer (here, aliphatic polyisocyanate is excluded), and a polyisocyanate derivative (here, aliphatic polyisocyanate derivative is excluded).

Examples of the polyisocyanate monomer include polyisocyanates such as aromatic polyisocyanate, araliphatic polyisocyanate, and alicyclic polyisocyanate.

Examples of the aromatic polyisocyanate include aromatic diisocyanates such as m- or p-phenylenediisocyanate or a mixture thereof, 2,4- or 2,6-tolylene diisocyanate or a mixture thereof (TDI), 4,4'-, 2,4'- or 2,2'-diphenylmethane diisocyanate or a mixture thereof (MDI), 4,4'-toluidinediisocyanate (TODI), 4,4'-diphenylether diisocyanate, 4,4'-diphenyldiisocyanate, and 1,5-naphthalenediisocyanate (NDI).

Examples of the araliphatic polyisocyanate include araliphatic diisocyanates such as 1,3- or 1,4-xylylenediisocyanate or a mixture thereof (XDI), 1,3- or 1,4-tetramethylxylylenediisocyanate or a mixture thereof (TMXDI), and $\omega,\omega'$-diisocyanate-1,4-diethylbenzene.

Examples of the alicyclic polyisocyanate include alicyclic diisocyanates such as 1,3-cyclopentene diisocyanate, 1,4-cyclohexanediisocyanate, 1,3-cyclohexanediisocyanate, 3-isocyanatomethyl-3,5,5-trimethylcyclohexylisocyanate (isophoronediisocyanate; IPDI), 4,4'-, 2,4'- or 2,2'-dicyclohexylmethanediisocyanate or a mixture thereof (hydrogenated MDI), methyl-2,4-cyclohexanediisocyanate, methyl-2,6-cyclohexanediisocyanate, 1,3- or 1,4-bis(isocyanatomethyl)cyclohexane or a mixture thereof (hydrogenated XDI), norbomanediisocyanate (NBDI).

These polyisocyanate monomers can be used singly, or can be used in combination of two or more.

Examples of the polyisocyanate derivative include multimers (for example, dimers, trimers, pentamers, and heptamers), allophanate derivatives (for example, allophanate derivatives produced by reaction of the above-described polyisocyanate monomer and alcohol), biuret derivatives (for example, biuret derivatives produced by reaction of the above-described polyisocyanate monomer and water or amines), urea derivatives (for example, urea derivatives produced by reaction of the above-described polyisocyanate monomer and diamine), oxadiazinetrione derivatives (for example, oxadiazinetrione derivatives produced by reaction of the above-described polyisocyanate monomer and carbon dioxide), carbodiimide derivatives (carbodiimide derivatives produced by decarboxylation condensation reaction of the above-described polyisocyanate monomer), polyol derivatives (for example, polyol derivative (alcohol adduct) produced by reaction of the above-described polyisocyanate monomer and low molecular-weight polyol described later (preferably, low molecular-weight triol described later), and polyol derivatives (polyisocyanate group-terminated prepolymer) produced by reaction of the above-described polyisocyanate monomer and low molecular-weight polyol described later and/or high molecular weight polyol described later (preferably, high molecular weight polyol described later)) of the above-described polyisocyanate monomer.

These polyisocyanate derivatives can be used singly, or can be used in combination of two or more.

These other polyisocyanates and/or their derivatives can be used singly, or can be used in combination of two or more.

In the polyisocyanate component, the content of the component excluding the aliphatic polyisocyanate derivative (other polyisocyanate and/or its derivative) is, relative to the total amount of the aliphatic polyisocyanate derivative, for example, less than 50 mass%, preferably 30 mass% or less, more preferably 10 mass% or less, particularly preferably 0 mass%.

That is, the polyisocyanate component preferably contains the aliphatic polyisocyanate derivative singly.

The thus prepared polyisocyanate component has an isocyanate group equivalent of, for example, 150 or more, preferably 200 or more, and for example, 750 or less, preferably 500 or less.

The isocyanate group equivalent means the amine equivalent, and is determined by method A or B of JIS K 1603-1 (2007) (the same applies in the following).

The polyisocyanate component has an average functionality of, for example, 2.00 or more, preferably 2.10 or more, and for example, 2.90 or less, preferably 2.80 or less.

The polyisocyanate component has an isocyanate group content of, for example, 18 mass% or more, preferably 20 mass% or more, and for example, 30 mass% or less, preferably 28 mass% or less.

The isocyanate group content can be determined by n-dibutylamine method in accordance with JIS K 1556 (2006) (the same applies in the following).

The polyol component contains diol with a hydroxyl number of 100 or more and 300 or less and triol with a hydroxyl number of 100 or more and 600 or less.

Examples of the diol include polyoxyalkylene diol having an oxyalkylene group with carbon atoms of 2 to 3, and/or polyesterdiol that is a reaction product of polybasic acid and/or its alkylester, and polyhydric alcohol.

Examples of the polyoxyalkylene diol having an oxyalkylene group with carbon atoms of 2 to 3 include addition polymerization product of alkylene oxide having 2 to 3 carbon atoms produced by using low molecular-weight diol or low molecular-weight diamine as an initiator (including random and/or block copolymer of two or more types of alkylene oxide).

For the low molecular-weight diol, bifunctional low molecular-weight polyol having a number average molecular weight of less than 300 (preferably less than 400), usually 40 or more and having two hydroxyl groups is used, and for example, aliphatic diol, alicyclic diol, and aromatic diol are used.

Examples of the aliphatic diol include ethylene glycol, diethylene glycol, triethylene glycol, propylene glycol, dipropylene glycol, tripropylene glycol, 1,4-butane diol, 1,3-butane diol, 1,2-butane diol, 2-methyl-1,3-propane diol, 1,5-pentane diol, 3-methyl-1,5-pentane diol, 2,4-diethyl-1,5-pentane diol, 2,2,4-trimethylpentane-1,3-diol, 1,6-hexane diol, neopentyl glycol, 1,5-heptane diol, 1,7-heptane diol, 3,3'-dimethylolheptane, 1,8-octane diol, 1,9-nonane diol, 1,10-decane diol, 1,11-undecane diol, 1,12-undecane diol, and 12-hydroxystearyl alcohol.

Examples of the alicyclic diol include hydrogenated bisphenol A, hydrogenated xylylene diol, cyclohexane diol, cyclohexanedimethanol, and hydrogenated dimer diol.

Examples of the aromatic diol include bisphenol A, bis-hydroxyethylterephthalate, catechol, resorcin, hydroquinone, and 1,3- or 1,4-xylylene diol.

These low molecular-weight diols can be used singly, or can be used in combination of two or more.

The low molecular-weight diamine is a compound having two amino groups with a number average molecular weight of less than 300 (preferably less than 400), usually 40 or more, and for example, ethylene diamine, 1,3-propane diamine, 1,3- or 1,4-butanediamine, 1,6-hexamethylenediamine, 1,4-cyclohexanediamine, 3-aminomethyl-3,5,5-trimethylcyclohexylamine (isophoronediamine), 4,4'-dicyclohexylmethanediamine, 2,5(2,6)-bis(aminomethyl)bicyclo[2.2.1]heptane, 1,3-bis(aminomethyl)cyclohexane, hydrazine, and o, m, or p-tolylenediamine (TDA, OTD) are used.

These low molecular-weight diamines can be used singly, or can be used in combination of two or more.

For the initiator, preferably, the low molecular-weight diol is used.

Examples of the alkylene oxide having 2 to 3 carbon atoms include ethylene oxide (also called: oxirane), trimethylene oxide (also called: oxetan), and propylene oxide (also called: methyloxirane).

These alkylene oxides can be used singly, or can be used in combination of two or more.

For the alkylene oxide, preferably, ethylene oxide and propylene oxide are used, more preferably, propylene oxide is used.

For the polyoxyalkylene diol, to be specific, for example, polyethylene glycol, polypropylene glycol, and propylene oxide-ethylene oxide copolymer diol (random and/or block copolymer) are used.

These polyoxyalkylene diols can be used singly, or can be used in combination of two or more.

For the polyoxyalkylene diol, preferably, polypropylene glycol is used.

The polyoxyalkylene diol has a hydroxyl number of, as described above, 100 mgKOH/g or more, preferably 105 mgKOH/g or more, more preferably 150 mgKOH/g or more, and as described above, 300 mgKOH/g or less, preferably 290 mgKOH/g or less, more preferably 250 mgKOH/g or less.

When the polyoxyalkylene diol has a hydroxyl number within the above-described range, light transmissivity, durability, and mechanical strength of polyurethane resin can be improved.

The hydroxyl number is measured in accordance with the description of JIS K-1557-1 (2007) (the same applies in the following).

The polyoxyalkylene diol has a number average molecular weight of, for example, 300 or more, preferably 400 or more, more preferably 500 or more, and for example, 1200 or less, preferably 1000 or less.

The number average molecular weight is calculated based on the formula below (the same applies in the following).

$$\text{Number average molecular weight} = 56100 \times \text{average functionality/hydroxyl number}$$

The polyoxyalkylene diol has a CPR (controlled polymerization rate) of, for example, 5 or less, preferably 3 or less, more preferably 2 or less, even more preferably 1 or less, and for example, 0 or more, preferably 0.01 or more, more preferably 0.1 or more.

The CPR is measured in accordance with the method described in JIS K 1557-4(2007) (the same applies in the following).

Examples of the polyesterdiol include reaction product of polybasic acid and/or its alkylester, and polyhydric alcohol. Examples of the polyesterdiol include, to be more specific, a reaction product of diacid and/or its alkylester, and dihydric alcohol.

Examples of the dibasic acid include aliphatic dibasic acid such as oxalic acid, malonic acid, succinic acid, methylsuccinic acid, glutaric acid, adipic acid, 1,1-dimethyl-1,3-dicarboxypropane, 3-methyl-3-ethylglutaric acid, azelaic acid, sebacic acid, hydrogenated dimer acid, maleic acid, fumaric acid, itaconic acid, and HET acid; aromatic dibasic acid such as orthophthalic acid, isophthalic acid, terephthalic acid, toluenedicarboxylic acid, naphthalenedicarboxylic acid, and dimer acid; their acid anhydrides; and their acid halides. Examples of the acid anhydride include oxalic anhydride, succinic anhydride, maleic anhydride, phthalic anhydride, 2-alkyl (having 12 to 18 carbon atoms) succinic anhydride, and tetrahydrophthalic anhydride. Examples of the acid halide include oxalic acid dichloride, adipic acid dichloride, sebacic acid dichloride.

These dibasic acids can be used singly, or can be used in combination of two or more.

Examples of the alkyl ester of dibasic acid include the above-described methylester and ethylester of dibasic acid.

These alkyl ester of dibasic acids can be used singly, or can be used in combination of two or more.

Examples of the dihydric alcohol include the above-described low molecular-weight diol. These dihydric alcohols can be used singly, or can be used in combination of two or more.

Polyesterdiol is produced as a reaction product of condensation reaction of the above-described dibasic acid and the above-described dihydric alcohol, or transesterification of the above-described alkyl ester of dibasic acid and the above-described dihydric alcohol. For the polyesterdiol, preferably, a reaction product of condensation reaction between dibasic acid and dihydric alcohol is used.

The above-described condensation reaction or transesterification can be carried out under known reaction conditions, as necessary, in the presence of a known catalyst.

The polyester diol has a hydroxyl number of, as described above, 100 mgKOH/g or more, preferably 105 mgKOH/g or more, more preferably 150 mgKOH/g or more, and as described above, 300 mgKOH/g or less, preferably 290 mgKOH/g or less, more preferably 250 mgKOH/g or less.

When the hydroxyl number of polyesterdiol is within the above-described range, light transmissivity, durability, and mechanical strength of polyurethane resin can be improved.

The polyesterdiol has a number average molecular weight of, for example, 300 or more, preferably 400 or more, more preferably 500 or more, and for example, 1200 or less, preferably 1000 or less.

For the diol, the above-described polyoxyalkylene diol and/or the above-described polyesterdiol is used, preferably, the above-described polyoxyalkylene diol is used.

By using such diol, light transmissivity, durability, and mechanical strength of polyurethane resin can be improved.

The diol has a hydroxyl number of, as described above, 100 mgKOH/g or more, preferably 105 mgKOH/g or more, more preferably 150 mgKOH/g or more, and as described above, 300 mgKOH/g or less, preferably 290 mgKOH/g or less, more preferably 250 mgKOH/g or less.

The diol has a number average molecular weight of, for example, 300 or more, preferably 400 or more, more preferably 500 or more, and for example, 1200 or less, preferably 1000 or less.

Examples of the triol include polyoxyalkylene triol having an oxyalkylene group with carbon atoms of 2 to 3, and/or polyestertriol that is a reaction product of polybasic acid and/or its alkylester, and polyhydric alcohol.

Examples of the polyoxyalkylene triol having an oxyalkylene group with carbon atoms of 2 to 3 include an addition polymerization product (including random and/or block copolymer of two or more alkylene oxides) of alkylene oxide having 2 to 3 carbon atoms using low molecular-weight triol or low molecular-weight triamine as an initiator.

The low molecular-weight triol is a trifunctional low molecular-weight polyol having three hydroxyl groups and a number average molecular weight of less than 400 (preferably less than 300), usually 40 or more.

Examples of the low molecular-weight triol include glycerine, 2-methyl-2-hydroxymethyl-1,3-propane diol, 2,4-dihydroxy-3-hydroxymethylpentane, 1,2,6-hexane triol, trimethylolethane, trimethylolpropane, 2-methyl-2-hydroxymethyl-1,3-propane diol, 2,4-dihydroxy-3-(hydroxymethyl)pentane, 2,2-bis(hydroxymethyl)-3-butanol, and other aliphatic triols (having 8 to 24 carbon atoms), and preferably, trimethylolpropane is used.

These low molecular-weight triols can be used singly, or can be used in combination of two or more.

The low molecular-weight triamine is a compound having tree amino groups and having a number average molecular weight of less than 300 (preferably less than 400), usually 40 or more, and for example, diethylene triamine, 4-aminomethyl-1,8-octanediamine, 2,2',2"-triaminotriethylamine, tris-1,1,1-aminoethylethane, 1,2,3-triaminopropane, tris-(3-aminopropyl)-amine, and N,N,N',N'-tetrakis-(2-aminoethyl)-ethylene diamine are used.

These low molecular-weight triamines can be used singly, or can be used in combination of two or more.

For the initiator, preferably, low molecular-weight triol is used.

Examples of the alkylene oxide having 2 to 3 carbon atoms include the above-described alkylene oxide.

These alkylene oxides can be used singly, or can be used in combination of two or more.

For the alkylene oxide, preferably, ethylene oxide and propylene oxide are used, more preferably, propylene oxide is used.

For the polyoxyalkylene triol, to be specific, polyethylene triol, polypropylene triol, and propylene oxide-ethylene oxide copolymer triol (random and/or block copolymer) are used.

These polyoxyalkylene triols can be used singly, or can be used in combination of two or more.

For the polyoxyalkylene triol, preferably, polypropylene triol is used.

The polyoxyalkylene triol has a hydroxyl number of, as described above, 100 mgKOH/g or more, preferably 109 mgKOH/g or more, more preferably 150 mgKOH/g or more, and as described above, 600 mgKOH/g or less, preferably 590 mgKOH/g or less, more preferably 570 mgKOH/g or less.

When the polyoxyalkylene triol has a hydroxyl number within the above-described range, light transmissivity, durability, and mechanical strength of polyurethane resin can be improved.

The polyoxyalkylene triol has a number average molecular weight of, for example, 300 or more, preferably 400 or more, more preferably 500 or more, and for example, 2000 or less, preferably 1700 or less.

The polyoxyalkylene triol has a CPR (controlled polymerization rate) of, for example, 5 or less, preferably 3 or less, more preferably 2 or less, even more preferably 1 or less, and for example, 0 or more, preferably 0.01 or more, more preferably 0.1 or more.

Examples of the polyestertriol include a reaction product of polybasic acid and/or its alkylester, and polyhydric alcohol. To be more specific, examples of the polyestertriol include a reaction product of dibasic acid and/or its alkylester, and trihydric alcohol and dihydric alcohol.

Examples of the dibasic acid and/or its alkylester include the above-described dibasic acid and/or its alkylester. These polybasic acids and/or its alkylesters can be used singly, or can be used in combination of two or more.

Examples of the dihydric alcohol include the above-described dihydric alcohol, to be specific, the above-described low molecular-weight diol is used. These dihydric alcohols can be used singly, or can be used in combination of two or more.

Examples of the trihydric alcohol include the above-described low molecular-weight triol. These trihydric alcohols can be used singly, or can be used in combination of two or more.

The polyestertriol is produced as follows: first, the above-described dibasic acid and the above-described trihydric alcohol are subjected to condensation reaction at a ratio such that the carboxyl group of the dibasic acid is excessive relative to the hydroxyl group of the trihydric alcohol, and thereafter, the produced reaction product (reaction solution) and dihydric alcohol are further allowed to react, or alkylester of the above-described dibasic acid and the above-described trihydric alcohol are subjected to transesterification such that the alkylester group of alkylester of dibasic acid is excessive relative to the hydroxyl group of trihydric alcohol, and thereafter the produced reaction product (reaction solution) and dihydric alcohol are further allowed to react, thereby producing a reaction product.

The above-described condensation reaction or transesterification can be carried out under known reaction conditions, as necessary, in the presence of a known catalyst.

The polyestertriol has a hydroxyl number of, as described above, 100 mgKOH/g or more, preferably 109 mgKOH/g or more, more preferably 150 mgKOH/g or more, and as described above, 600 mgKOH/g or less, preferably 590 mgKOH/g or less, more preferably 570 mgKOH/g or less.

When the polyestertriol has a hydroxyl number within the above-described range, light transmissivity, durability, and mechanical strength of polyurethane resin can be improved.

The polyestertriol has a number average molecular weight of, for example, 300 or more, preferably 400 or more, more preferably 500 or more, and for example, 2000 or less, preferably 1700 or less.

The polyesterdiol and polyestertriol of the present invention are a reaction product of polybasic acid and/or its alkylester, and polyhydric alcohol, and do not include ring-opening polymerization polyesterpolyol (polycaprolactonepolyol, polyvalerolactonepolyol, etc.) produced by ring-opening polymerization of lactones or lactides using a low molecular-weight polyol as an initiator.

For the polyesterdiol and polyestertriol, by using a reaction product of polybasic acid and/or its alkylester, and polyhydric alcohol, not the ring-opening polymerization polyesterpolyol, light transmissivity, durability, and mechanical strength can be improved.

For the triol, the above-described polyoxyalkylene triol, and/or the above-described polyestertriol, preferably, the above-described polyoxyalkylene triol is used.

By using such triol, light transmissivity, durability, and mechanical strength of polyurethane resin can be improved.

Triol has a hydroxyl number of, as described above, 100 mgKOH/g or more, preferably 109 mgKOH/g or more, more preferably 150 mgKOH/g or more, and as described above, 600 mgKOH/g or less, preferably 590 mgKOH/g or less, more preferably 570 mgKOH/g or less.

When the polyoxyalkylene triol has a hydroxyl number within the above-described range, light transmissivity, durability, and mechanical strength of polyurethane resin can be improved.

The polyoxyalkylene triol has a number average molecular weight of, for example, 300 or more, preferably 400 or more, more preferably 500 or more, and for example, 2000 or less, preferably 1700 or less.

The polyol component contains the above-described diol and the above-described triol.

In the polyol component, preferably, the triol-derived hydroxyl group is contained more than the diol-derived hydroxyl group. In other words, preferably, the chemical equivalent (mass of triol/hydroxyl equivalent of triol) of triol contained in the polyol component is larger than the chemical equivalent (mass of diol/hydroxyl equivalent of diol) of diol contained in the polyol component.

The hydroxyl equivalent is calculated based on the following formula (the same applies in the following).

$$\text{Hydroxyl equivalent} = 56100/\text{hydroxyl number}$$

To be more specific, relative to a total amount of the polyol component, the above-described triol content (chemical equivalent based) is, for example, 10 equivalent% or more, preferably 20 equivalent% or more, more preferably 30 equivalent% or more, even more preferably 40 equivalent% or more, even more preferably 50 equivalent% or more, even more preferably more than 50 equivalent%, particularly preferably 60 equivalent% or more, and for example,99 equivalent% or less, preferably 97 equivalent% or less, more preferably 95 equivalent% or less, even more preferably 94 equivalent% or less, even more preferably 93 equivalent% or less, even more preferably 90 equivalent% or less, even more preferably 80 equivalent% or less, even more preferably 75 equivalent% or less, particularly preferably 70 equivalent% or less.

Relative to a total amount of the polyol component, the above-described diol content (chemical equivalent based) is, for example, 1 equivalent% or more, preferably 3 equivalent% or more, more preferably 5 equivalent% or more, even more preferably 6 equivalent% or more, even more preferably 7 equivalent% or more, even more preferably 10 equivalent% or more, even more preferably 20 equivalent% or more, even more preferably 25 equivalent% or more, particularly preferably 30 equivalent% or more, and for example, 90 equivalent% or less, preferably 80 equivalent% or less, more preferably 70 equivalent% or less, even more preferably 60 equivalent% or less, even more preferably 50 equivalent% or less, even more preferably less than 50 equivalent%, particularly preferably 40 equivalent% or less.

When the triol content and the diol content are within the above-described range, light transmissivity, durability, and mechanical strength of polyurethane resin can be improved.

The polyol component has a CPR (controlled polymerization rate) of, for example, 5 or less, preferably 3 or less, and for example, 0 or more, preferably 0.01 or more, more preferably 0.1 or more.

When the CPR is more than the above-described upper limit, that is, when the polyol component excessively contains the basic substance that works as a urethane-forming catalyst, the reaction velocity of the polyisocyanate component and the polyol component may become excessively fast, and partial crystallization may be caused in the produced polyurethane resin, and as a result, polyurethane resin gets cloudy, which may reduce light transmissivity.

Meanwhile, when the CPR is excessively low, that is, when an excessively low amount of the basic substance that works as a urethane-forming catalyst is contained, the reaction velocity of the polyisocyanate component and the polyol component may become relatively slow, which suppresses partial crystallization, and light transmissivity can be secured, but may reduce crosslinking density, and mechanical strength (hardness, etc.) may be reduced.

In this regard, when the CPR is within the above-described range, the reaction velocity of the polyisocyanate component and the polyol component can be adjusted to be within a suitable range, and partial crystallization can be suppressed, and sufficient crosslinking density can be secured, and polyurethane resin with excellent light transmissivity, and further excellent durability and mechanical strength can be produced.

The polyol component preferably contains polyesterdiol and/or polyestertriol.

That is, the polyol component may contain only the polyether component (polyoxyalkylene diol and polyoxyalkylene triol), but preferably, the polyester component (polyesterdiol and/or polyestertriol) is contained.

When polyesterdiol and/or polyestertriol are used, in the polyol component, a total amount of polyesterdiol and polyestertriol content (chemical equivalent based) is, for example, 3 equivalent% or more, preferably 5 equivalent% or more, more preferably 10 equivalent% or more, even more preferably 15 equivalent% or more, and for example, 70 equivalent% or less, preferably 65 equivalent% or less, more preferably 60 equivalent%, even more preferably 50 equivalent% or less.

When the polyesterdiol and polyestertriol content is within the above-described range, hardness, mechanical strength, and heat resistance of polyurethane resin can be improved, and sinking can be suppressed.

In the following, a total of the polyesterdiol content and polyestertriol content (chemical equivalent based) relative to the polyol component may be referred to as an ester equivalent (equivalent%).

The polyol component may also contain, to the extent that does not hinder the excellent effects of the present invention, polyol (in the following, referred to as other polyol) other than the above-described diol and triol.

Examples of the other polyol include a known high molecular weight polyol having a number average molecular weight of 300 or more and 5000 or less, to be specific, for example, polycarbonate polyol, acrylic polyol, epoxy polyol, natural oil polyol, silicone polyol, fluorine polyol, polyolefin polyol, and polyurethane polyol are used.

Examples of the other polyol include, in addition to the above-described ones, for example, diol with a hydroxyl number of less than 100 mgKOH/g, diol with a hydroxyl number of more than 300 mgKOH/g, triol with a hydroxyl number of less than 100 mgKOH/g, or triol with a hydroxyl number of more than 600 mgKOH/g, and furthermore, a low molecular-weight polyol having four or more hydroxyl groups and a number average molecular weight of less than 300 (preferably less than 400), usually 40 or more is used.

These other polyols can be used singly, or can be used in combination of two or more.

For the other polyol, preferably, diol with a hydroxyl number of more than 300 mgKOH/g, and triol with a hydroxyl number of more than 600 mgKOH/g is used.

Examples of the diol with a hydroxyl number of more than 300 mgKOH/g include the above-described low molecular-weight diol, and they can be used singly, or can be used in combination of two or more.

Examples of the triol with a hydroxyl number of more than 600 mgKOH/g include the above-described low molecular-weight triol, and they can be used singly, or can be used in combination of two or more.

For the other polyol, more preferably, diol with a hydroxyl number of more than 300 mgKOH/g is used, even more preferably, a low molecular-weight diol is used, even more preferably, aliphatic diol is used, particularly preferably, dipropylene glycol is used.

The other polyol content (chemical equivalent based) relative to a total amount of the polyol component is 10 equivalent% or less, preferably 5 equivalent% or less, more preferably 0 equivalent%.

The polyol component has an average functionality of, for example, 2.1 or more, preferably 2.2 or more, more preferably 2.3 or more, even more preferably 2.4 or more, and for example, 2.9 or less, preferably 2.8 or less, more preferably 2.7 or less, even more preferably 2.6 or less. When the polyol component has an average functionality of within the above-described range, hardness, mechanical strength, heat resistance, and moist and heat resistant of polyurethane resin can be improved.

The polyurethane resin is produced as a reaction product by subjecting the above-described polyisocyanate component and the above-described polyol component to polymerization (reaction) by a polymerization method such as, for example, bulk polymerization and solution polymerization.

In bulk polymerization, for example, under nitrogen flow, while stirring a polyisocyanate component, a polyol component is added thereto, and reaction is carried out at a reaction temperature of 50 to 250°C, even more preferably 50 to 200°C, for about 0.5 to 15 hours.

In solution polymerization, a polyisocyanate component and a polyol component are added to an organic solvent, and reaction is carried out at a reaction temperature of 50 to 120°C, preferably 50 to 100°C, for about 0.5 to 15 hours.

Examples of the organic solvent include ketones such as acetone, methyl ethyl ketone, methylisobutylketone, and cyclohexanone; nitriles such as acetonitrile; alkylesters such as methyl acetate, ethyl acetate, butyl acetate, and isobutyl acetate; aliphatic hydrocarbons such as n-hexane, n-heptane, and octane; alicyclic hydrocarbons such as cyclohexane and methylcyclohexane; aromatic hydrocarbons such as toluene, xylene, and ethylbenzene; glycolether esters such as methylcellosolveacetate, ethylcellosolveacetate, methylcarbitolacetate, ethylcarbitolacetate, ethylene glycolethylether acetate, propylene glycolmethylether acetate, 3-methyl-3-methoxybutylacetate, and ethyl-3-ethoxypropionate; ethers such as diethylether, tetrahydrofuran, and dioxane; halogenated aliphatic hydrocarbons such as methyl chloride, methylene chloride, chloroform, carbon tetrachloride, methyl bromide, methylene iodide, and dichloroethane; and polar aprotic solvents such as N-methylpyrrolidone, dimethylformamide, N,N'-dimethylacetamide, dimethyl sulfoxide, and hexamethylphosphonylamide.

Examples of the organic solvent include nonpolar solvents (nonpolar organic solvent), and examples of nonpolar solvents include those nonpolar organic solvents having an aniline point of, for example, 10 to 70°C, preferably 12 to 65°C and having low toxicity and solvency, such as aliphatic, naphthene hydrocarbon organic solvent; and vegetable oils typically represented by turpentine oil.

The nonpolar organic solvents can be obtained from commercially available products, and examples of those commercially available products include petroleum hydrocarbon organic solvents such as Haws (manufactured by Shell Chemicals, aniline point 15°C), Swasol 310 (manufactured by Maruzen Petrochemical, aniline point 16°C), Esso Naphtha No. 6 (manufactured by Exxon Mobil Chemical, aniline point 43°C), Laws (manufactured by Shell Chemicals, aniline point 43°C), Esso Naphtha No. 5 (manufactured by Exxon Mobil Corporation, aniline point 55°C), and pegasol 3040 (manufactured by Exxon Mobil Corporation, aniline point 55°C); and also turpentine oils such as methylcyclohexane (aniline point 40°C), ethylcyclohexane (aniline point 44°C), and gum turpentine N (manufactured by YASUHARA CHEMICAL CO.,LTD., aniline point 27°C).

These organic solvents can be used singly, or can be used in combination of two or more.

Furthermore, in the above-described polymerization reaction, as necessary, for example, a known urethane-forming catalyst such as amines and organometallic compounds can be added at a suitable ratio.

Examples of the amines include tertiary amines such as triethylamine, triethylenediamine, bis-(2-dimethylaminoethyl) ether, and N-methylmorpholine; quaternary ammonium salts such as tetraethyl hydroxyl ammonium; and imidazoles such as imidazole and 2-ethyl-4-methylimidazole.

Examples of the organic metal compound include organic tin compounds such as tin acetate, stannous octoate, stannous oleate, tin laurate, dibutyl tin diacetate, dimethyl tin dilaurate, dibutyl tin dilaurate, dibutyl tin dimercaptide, dibutyl tin maleate, dibutyl tin dilaurate, dibutyl tin dineodecanoate, dioctyl tin dimercaptide, dioctyl tin dilaurylate, and dibutyl tin dichloride; organic lead compounds such as lead octanoate and lead naphthenate; organic nickel compounds such as nickel naphthenate; organic cobalt compounds such as cobalt naphthenate; organic copper compounds such as copper octenate; organic bismuth compounds such as bismuth octylate and bismuth neodecanoate; organic zinc compounds; organic zirconium compounds; zinc acetylacetonate; bismuth(2-ethylhexanoate), bismuth neodecanoate, zinc 2-ethylhexanoate, zinc neodecanoate, bismuth tetramethylheptanedioate, and their mixtures.

Examples of urethane-forming catalyst also include potassium salts such as potassium carbonate, potassium acetate, and potassium octylate.

In addition, for the urethane-forming catalyst, for example, a compound containing zinc and zirconium, and a zirconium compound are used.

For such a urethane-forming catalyst, a commercially available product can be obtained, and for the compound containing zinc and zirconium, for example, trade name: K-Kat XK-627 (manufactured by King Industries), trade name: K-Kat XK-604 (Manufactured by King Industries), trade name: K-Kat XK-617 (Manufactured by King Industries), and trade name: K-Kat XK-618 (Manufactured by King Industries) are used. For the zirconium compound, trade name: K-Kat XK-6212 (Manufactured by King Industries) can be used.

For the urethane-forming catalyst, preferably, a compound containing zinc and zirconium is used, to be specific, trade name: K-Kat XK-627 is used. Use of such a urethane-forming catalyst allows for excellent usable time, and furthermore, mechanical properties of the produced polyurethane resin are excellent. The produced polyurethane resin has no sinking, and excellent appearance.

These urethane-forming catalysts can be used singly, or can be used in combination of two or more.

The urethane-forming catalyst can be added in an amount relative to a total mass of polyurethane resin of, preferably 10 ppm or more, preferably 20 ppm or more, more preferably 30 ppm or more, even more preferably 50 ppm or more, particularly preferably 100 ppm or more, and for example, 1000 ppm or less, preferably 750 ppm or less, more preferably 500 ppm or less, even more preferably 250 ppm or less, particularly preferably 150 ppm or less.

In bulk polymerization and solution polymerization, for example, a polyisocyanate component and a polyol component are blended so that the equivalent ratio (NCO/OH) of the isocyanate group of the polyisocyanate component relative to the hydroxyl group of the polyol component is, for example, 0.75 or more, preferably 0.9 or more, and for example, 1.3 or less, preferably 1.1 or less.

To carry out the above-described polymerization reaction more industrially, the polyurethane resin can be produced by a known method such as one shot process and prepolymer process, preferably, by one shot process.

In one shot process, for example, the polyisocyanate component and the polyol component are formulated (mixed) at the above-described equivalent ratio, and thereafter, the mixture is allowed to go through curing reaction at, for example, room temperature to 250°C, preferably, room temperature to 200°C, for, for example, 5 minutes to 72 hours, preferably 4 to 24 hours. The curing temperature can be a constant temperature, or the temperature can be increased or decreased stepwise.

In this method, preferably, the polyisocyanate component and/or polyol component are heated to, for example, normal temperature, or to 30 to 120°C to allow the viscosity to be low, and then they are mixed. Thereafter, as necessary, defoaming is carried out, and then the mixture is put into a preheated mold, causing curing reaction.

Then, by demolding thereafter, polyurethane resin molded into a desired shape (cast polyurethane elastomer) can be produced. After demolding, as necessary, aging can be carried out at room temperature for about within 7 days.

In this manner, polyurethane resin can be produced.

When polyurethane resin is produced, as necessary, furthermore, known additives such as plasticizer, anti-blocking agent, heat-resistant stabilizer, light stabilizer, antioxidant, release agent, catalyst, foaming agent, and furthermore, pigment, dye, lubricant, filler, and hydrolysis inhibitor can be blended at a suitable ratio. These additives can be added at the time of production of the components, or can be added when the components are blended, or can be added after blending.

In such production of polyurethane resin, the aliphatic polyisocyanate derivative containing an isocyanurate group and an allophanate group at a specific ratio is used, and also the polyol component contains a specific triol and a specific diol at a specific ratio. Therefore, by combining these, the produced polyurethane resin achieves excellent light transmissivity, and furthermore, excellent durability and mechanical strength.

To be more specific, when the polyol component does not contain the specific triol and the specific diol at a specific ratio, and for example, contains polyol having an average functionality of more than 3 singly, crosslinking density of polyurethane resin is excessively high, and although excellent mechanical strength is achieved, light transmissivity is reduced.

Meanwhile, when the average functionality is adjusted to be within the range of 2 to 3, excessively high crosslinking density can be suppressed, but for example, when the isocyanurate group content and allophanate group content of the polyisocyanate component are not the above-described specific ratio, and for example, a bifunctional allophanate group is excessively high relative to the trifunctional isocyanurate group, the crosslinking density is excessively low, and therefore sufficient mechanical strength cannot be achieved, and durability of light transmissivity is poor. When the trifunctional isocyanurate group is excessively high relative to the bifunctional allophanate group, crosslinking density is excessively high, and therefore light transmissivity is poor.

In this regard, when the polyol component contains diol and triol, and the average functionality is adjusted to be in the range of 2 to 3, and the isocyanurate group content and allophanate group content in the polyisocyanate component is within the above-described specific ratio, the crosslinking density is adjusted to be in a suitable range, and therefore excellent mechanical strength can be secured. However, for example, when polytetramethylene ether polyol, which is highly crystalline, is used as diol and/or triol, crystallinity of polyurethane resin is excessively high, and therefore light transmissivity is poor.

In contrast, when the isocyanurate group content and allophanate group content of the polyisocyanate component are within the above-described specific ratio, and also the polyol component contains a specific triol and a specific diol at a specific ratio, polyurethane resin with excellent light transmissivity, and furthermore, excellent durability and mechanical strength can be produced.

The above-described method for producing polyurethane resin allows for efficient production of polyurethane resin with excellent light transmissivity, and furthermore excellent durability and mechanical strength.

To be more specific, the polyurethane resin (thickness 2mm) has an initial haze measured in accordance with Examples described later of, for example, 4.0 or less, preferably 3.0 or less, more preferably 2.5 or less, even more preferably 2.0 or less, particularly preferably less than 2.0, and usually 0.5 or more.

The polyurethane resin (thickness 2mm) has a haze after moist and heat resistant test measured in accordance with Examples described later of, for example, 7.0 or less, preferably 5.0 or less, more preferably 3.0 or less, even more preferably 2.0 or less, particularly preferably less than 2.0, and usually 0.5 or more.

The polyurethane resin (thickness 2mm) has a haze change measured in accordance with Examples described later of, for example, 5.0 or less, preferably 3.0 or less, more preferably 2.0 or less, even more preferably 1.0 or less, particularly preferably 0.5 or less, and usually 0 or more.

The polyurethane resin (thickness 10mm) has a type D hardness measured in accordance with Examples described later of, for example, 56 or more, preferably 60 or more, more preferably 65 or more, even more preferably 70 or more, and usually 90 or less.

Therefore, the produced polyurethane resin can be suitably used as the following in various industrial fields which requires light transmissivity (transparency), and furthermore, durability and mechanical strength: transparent rubber for bands and tubes; transparent hard plastic such as glass alternative plastic; coating materials; adhesives; water proof materials; films; sheets; tubes; blades; speakers; audio members; sensors; high luminance LED sealing materials; organic EL members; solar photovoltaic members; robot members; android members; wearable members; sports goods; leisure goods; medical goods; care taking goods; house making goods; audio members; lighting members; chandeliers; street light; sealing materials; encapsulating materials; gaskets; vibration isolation • seismic motion mitigation • base isolation members; acoustic insulation members; commodities; miscellaneous goods; cushions; beddings; stress absorbers; stress relievers; interior and exterior members for automobiles; optical members; OA device members; protection members for surfaces of miscellaneous goods; semiconductor sealing materials; self-repairing materials; health goods; lenses for glasses; ceiling members; wall members; floor members; toilet members; sink members; and bath tub members.

The polyurethane resin can also be used as an intermediate layer of a laminate.

To be specific, the above-described polyurethane resin can form an interlayer adhesion layer of transparent sheets or films of resin such as, for example, polycarbonate and polymethyl methacrylate.

In that case, polyurethane resin is used as an adhesive that allows a target resin (for example, polycarbonate, polymethyl methacrylate, etc.) to adhere to each other. Preferably, the target resin is pretreated with an aclyric or silicone primer.

Polyurethane resin can be used as a supporter in various applications without limiting to the above-described use.

To produce polyurethane resin of the present invention, various members (for example, lighting members such as LEDs, various sensors of electronic circuit and pressure, displays for organic EL, and also heat conductive wire, generator element, etc.) can be introduced into a mold (for example, metal mold, silicon mold, resin mold, etc.) in advance.

In this case, for example, a liquid mixture of the polyol component and the polyisocyanate component after defoaming is poured in the above-described mold in which members are disposed, and cured under the above-described conditions.

In such a method, the temperature of the mixture liquid can be controlled by the amount of the catalyst and the temperature of the curing atmosphere in the curing process, and therefore the curing temperature can be controlled to a relatively low temperature.

To be specific, when the curing temperature is controlled to be a relatively low temperature, the amount of the catalyst can be, relative to the polyol component, for example, 5 ppm or more, preferably 10 ppm or more, more preferably 20 ppm or more, and for example, 1000 ppm or less, preferably 500 ppm or less, more preferably 100 ppm or less.

Examples of the temperature of the curing atmosphere include 20°C or more, preferably 40°C or more, more preferably 50°C or more, and for example, 100°C or less, preferably 80°C or less, more preferably 70°C or less.

In this manner, the temperature can be prevented from reaching a relatively high temperature at the time of curing, and therefore the members with a relatively low heat resistance can be disposed in the mold.

Examples

Next, the present invention is described based on Examples and Comparative Examples. However, the present invention is not limited to Examples below. The "parts" and "%" are based on mass unless otherwise specified. The specific numerical values of mixing ratio (content ratio), physical property value, and parameter used in the following can be replaced with upper limit values (numerical values defined with "or less" or "below") or lower limit values (numerical values defined with "or more" or "above") of corresponding numerical values in mixing ratio (content ratio), physical property value, and parameter described in "**DESCRIPTION OF EMBODIMENTS**" above.

The measurement methods used in Preparation Examples, Synthesis Examples, Production Examples, Examples, and Comparative Examples are described below.

1. Measurement method

<Pentamethylene diisocyanate concentration (Unit: mass%)>

Pentamethylene diisocyanate (in the following, referred to as PDI) produced in the same manner as in Example 1 of **DESCRIPTION** of WO 2012/121291 was used, and the pentamethylene diisocyanate concentration in the polyisocyanate derivative was calculated based on the calibration curve made from the area value of chromatogram obtained under the following HPLC analysis conditions.

Device; Prominence (manufactured by Shimadzu Corporation)

1) Pump LC-20AT
2) Degasser DGU-20A3
3) Autosampler SIL-20A
4) Column thermostatic chamber COT-20A
5)Detector SPD-20A

Column; SHISEIDO SILICA SG-120
Column temperature; 40°C
Eluent; n-hexane/methanol/1,2-dichloroethane = 90/5/5(volume ratio)
Flow rate; 0.2mL/min
Detection method; UV 225nm

<Isocyanate group content (Unit: mass%)>

The isocyanate group content of polyisocyanate derivative was measured by n-dibutylamine method using potential difference titrator in conformity with JIS K-1556 (2006).

<Allophanate group content relative to isocyanurate group>

$^1$H-NMR measurement was carried out based on the following devices and conditions, and the allophanate group content relative to 100 mol of the isocyanurate group was measured from integrated values of the peaks.

Tetramethylsilane was used as a criteria of chemical shift 0ppm.

Device; JNM-AL400 (manufactured by JEOL)
Conditions;

measurement frequency: 400MHz, solvent: DMSO, concentration: 5%
Measurement temperature: room temperature, scanning 128 times
Pulse interval: 15 seconds

Allophanate group peak range: 8.3 to 8.7ppm
Isocyanurate group peak range: 3.8ppm

<CPR>

CPR was measured in accordance with the method of JIS K1557-4 (2007).

2. Materials

The following materials were prepared. Other materials were produced in accordance with the following Production Examples.

<Diol>

D-700: trade name "ACTCOL D-700", polyoxyalkylene (having 2 to 3 carbon atoms)diol (polypropylene glycol), average hydroxyl number 160 mgKOH/g, average functionality 2, hydroxyl equivalent 350, CPR 0.1, manufactured by Mitsui Chemicals SKC polyurethane D-400: trade name "ACTCOL D-400", polyoxyalkylene (having 2 to 3 carbon atoms) diol (polypropylene glycol), average hydroxyl number 281 mgKOH/g, average functionality 2, hydroxyl equivalent 200, manufactured by Mitsui Chemicals SKC polyurethane D-1000: trade name "ACTCOL D-1000", polyoxyalkylene (having 2 to 3 carbon atoms) diol (polypropylene glycol), average hydroxyl number 112 mgKOH/g, average functionality 2, hydroxyl equivalent 500, manufactured by Mitsui Chemicals SKC polyurethane D-1500: trade name "ACTCOL D-1500", polyoxyalkylene (having 2 to 3 carbon atoms)diol (polypropylene glycol), average hydroxyl number 75 mgKOH/g, average functionality 2, hydroxyl equivalent 750, manufactured by Mitsui Chemicals SKC polyurethane P-510: trade name "Kuraray polyol P-510", polyesterdiol (reaction product produced by condensation reaction of 3-methyl-1,5-pentane diol and adipic acid), average hydroxyl number 224 mgKOH/g, average functionality 2, hydroxyl equivalent 250, manufactured by Kuraray Co., Ltd.
6PN: trade name "bisol6PN", polyoxyalkylene diol (reaction product of bisphenol A and propylene oxide), average hydroxyl number 198 mgKOH/g, average functionality 2, hydroxyl equivalent 283, manufactured by TOHO Chemical Industry Co., Ltd.

<Triol>

T-300: trade name "ACTCOL T-300", polyoxyalkylene (having 2 to 3 carbon atoms)triol (polypropylene triol), average hydroxyl number 561 mgKOH/g, average functionality 3, hydroxyl equivalent 100, CPR 0.1, manufactured by Mitsui Chemicals SKC polyurethane T-700: trade name "ACTCOL T-700", polyoxyalkylene (having 2 to 3 carbon atoms)triol (polypropylene triol), average hydroxyl number 234 mgKOH/g, average functionality 3, hydroxyl equivalent 240, manufactured by Mitsui Chemicals SKC polyurethane T-1500: trade name "ACTCOL T-1500", polyoxyalkylene (having 2 to 3 carbon atoms)triol (polypropylene triol), average hydroxyl number 112 mgKOH/g, average functionality 3, hydroxyl equivalent 500, manufactured by Mitsui Chemicals SKC polyurethane T-2000: trade name "ACTCOL T-2000", polyoxyalkylene (having 2 to 3 carbon atoms)triol (polypropylene triol), average hydroxyl number 85 mgKOH/g, average functionality 3, hydroxyl equivalent 660, manufactured by Mitsui Chemicals SKC polyurethane F-510: trade name "Kuraray polyol F-510", polyestertriol (reaction product produced by the reaction of reaction product of trimethylolpropane and adipic acid, and 3-methyl-1,5-pentane diol), average hydroxyl number 336 mgKOH/g, average functionality 3, hydroxyl equivalent 167, manufactured by Kuraray Co., Ltd.

<Polyol with functionality of more than three>

GR-16A: trade name "ACTCOL GR-16A", polyetherpolyol, average hydroxyl number 550 mgKOH/g, average functionality 3.8, hydroxyl equivalent 102, manufactured by Mitsui Chemicals SKC polyurethane

<Ring-opening polymerization polyetherpolyol>

PTG-1000SN: polytetramethylene ether glycol (polyetherpolyol produced by ring-opening polymerization of tetrahydrofuran), average hydroxyl number 112 mgKOH/g, average functionality 2, hydroxyl equivalent 500, manufactured by Hodogaya Chemical Co., LTD.

<Preparation of aliphatic polyisocyanate derivative>

Production Example 1 (Production of aliphatic polyisocyanate derivative A)

A four-neck flask equipped with a mixer, thermometer, reflux pipe, and nitrogen inlet tube was charged with 500 parts by mass of PDI produced in the same manner as in Example 1 in description of WO2012/121291, 19 parts by mass of isobutanol, 0.3 parts by mass of 2,6-di(t-butyl)-4-methylphenol, and 0.3 parts by mass of tris(tridecyl)phosphite, and the temperature was increased to 85°C, thereby causing urethane-forming reaction for 3 hours.

Then, 0.02 parts by mass of lead octanoate as the allophanate-formation catalyst was added, and reaction was carried out until the isocyanate group concentration reached a calculated value. Thereafter, 0.02 parts by mass of o-toluenesulfonamide was added. The produced reaction solution was allowed to pass through a thin-film distillation device (degree of vacuum 0.093KPa, temperature 150°C) to remove unreacted pentamethylene diisocyanate, and furthermore, relative to 100 parts by mass of the produced composition, 0.02 parts by mass of o-toluenesulfonamide was added, thereby producing aliphatic polyisocyanate derivative A.

The aliphatic polyisocyanate derivative A had a pentamethylene diisocyanate concentration of 0.2 mass%, an isocyanate group content of 20.5 mass%, and an allophanate group content relative to 100 mol of the isocyanurate group of 4078 mol.

Production Example 2 (Production of aliphatic polyisocyanate derivative B)

A four-neck flask equipped with a mixer, thermometer, reflux pipe, and nitrogen inlet tube was charged with 500 parts by mass of PDI of Production Example 1, 1 part by mass of isobutyl alcohol, 0.3 parts by mass of 2,6-di(tert-butyl)-4-methylphenol, and 0.3 parts by mass of tris(tridecyl)phosphite, and the mixture was allowed to react at 80°C for 2 hours.

Then, 0.05 parts by mass of N-(2-hydroxypropyl)-N,N,N-trimethylammonium-2-ethylhexanoate was added as the isocyanurate-forming catalyst. The refraction and isocyanate purity were measured, and the reaction was continued until the predetermined isocyanate group conversion rate was reached. The predetermined isocyanate group conversion rate (10 mass%) was reached after 50 minutes, and thus 0.12 parts by mass of o-toluenesulfonamide was added. The produced reaction solution was allowed to pass through a thin-film distillation device (degree of vacuum 0.093KPa, temperature 150°C) to remove unreacted pentamethylene diisocyanate, and furthermore, relative to 100 parts by mass of the produced composition, 0.02 parts by mass of o-toluenesulfonamide was added, thereby producing aliphatic polyisocyanate derivative B.

The aliphatic polyisocyanate derivative B had a pentamethylene diisocyanate concentration of 0.3 mass%, an isocyanate group content of 24.4 mass%, and an allophanate group content relative to 100 mol of the isocyanurate group of 7 mol.

Production Example 3 (Production of aliphatic polyisocyanate derivative C)

A four-neck flask equipped with a mixer, thermometer, reflux pipe, and nitrogen inlet tube was charged with 500 parts by mass of PDI of Production Example 1, 5 parts by mass of isobutyl alcohol, 0.3 parts by mass of 2,6-di(tert-butyl)-4-methylphenol, and 0.3 parts by mass of tris(tridecyl)phosphite, and reaction was carried out at 80°C for 2 hours.

Then, 0.05 parts by mass of N-(2-hydroxypropyl)-N,N,N-trimethylammonium-2-ethylhexanoate was added as the isocyanurate-forming catalyst. The refraction and isocyanate purity were measured, and the reaction was continued until the predetermined isocyanate group conversion rate was reached. The predetermined isocyanate group conversion rate (10 mass%) was reached after 50 minutes, and thus 0.12 parts by mass of o-toluenesulfonamide was added. The produced reaction solution was allowed to pass through a thin-film distillation device (degree of vacuum 0.093KPa, temperature 150°C) to remove unreacted pentamethylene diisocyanate, and furthermore, relative to 100 parts by mass of the produced composition, 0.02 parts by mass of o-toluenesulfonamide was added, thereby producing aliphatic polyisocyanate derivative C.

The aliphatic polyisocyanate derivative C had a pentamethylene diisocyanate concentration of 0.5 mass%, an isocyanate group content of 23.5 mass%, and an allophanate group content relative to 100 mol of the isocyanurate group of 55 mol.

Production Example 4 (Production of aliphatic polyisocyanate derivative D)

A four-neck flask equipped with a mixer, thermometer, reflux pipe, and nitrogen inlet tube was charged with 500 parts by mass of PDI of Production Example 1, 6 parts by mass of 1,3-butane diol, 0.3 parts by mass of 2,6-di(tert-butyl)-4-methylphenol, and 0.3 parts by mass of tris(tridecyl)phosphite, and reaction was carried out at 80°C for 2 hours.

Then, 0.05 parts by mass of N-(2-hydroxypropyl)-N,N,N-trimethylammonium-2-ethylhexanoate was added as the isocyanurate-forming catalyst. The refraction and isocyanate purity were measured, and the reaction was continued until the predetermined isocyanate group conversion rate was reached. The predetermined isocyanate group conversion rate (15 mass%) was reached after 60 minutes, and thus 0.12 parts by mass of o-toluenesulfonamide was added. The produced reaction solution was allowed to pass through a thin-film distillation device (degree of vacuum 0.093KPa, temperature 150°C) to remove unreacted pentamethylene diisocyanate, and furthermore, relative to 100 parts by mass of the produced composition, 0.02 parts by mass of o-toluenesulfonamide was added, thereby producing aliphatic polyisocyanate derivative D.

The aliphatic polyisocyanate derivative D had a pentamethylene diisocyanate concentration of 0.3 mass%, an isocyanate group content of 22.6 mass%, and an allophanate group content relative to 100 mol of the isocyanurate group of 42 mol.

Production Example 5 (Production of aliphatic polyisocyanate derivative E)

Aliphatic polyisocyanate derivative E was produced in the same manner as in Production Example 1, except that hexamethylene diisocyanate (in the following, referred to as HDI) was used. Aliphatic polyisocyanate derivative E had a hexamethylene diisocyanate concentration of 0.6 mass%, an isocyanate group content of 19.2 mass%, and an allophanate group content relative to 100 mol of the isocyanurate group of 4070 mol.

Production Example 6 (Production of aliphatic polyisocyanate derivative F)

Aliphatic polyisocyanate derivative F was produced in the same manner as in Production Example 2, except that HDI was used. Aliphatic polyisocyanate derivative F had a hexamethylene diisocyanate concentration of 0.3 mass%, an isocyanate group content of 22.5 mass%, and an allophanate group content relative to 100 mol of the isocyanurate group of 8 mol.

Production Example 7 (Production of aliphatic polyisocyanate derivative G)

A four-neck flask equipped with a mixer, thermometer, reflux pipe, and nitrogen inlet tube was charged with 500 parts by mass of PDI of Production Example 1, 0.2 parts by mass of tris(tridecyl)phosphite, 8 parts by mass of trimethylphosphoric acid, and 4 parts by mass of water. The temperature was increased to 130°C, and reaction was carried out until the isocyanate group concentration reached a calculated value. The produced reaction solution was allowed to pass through a thin-film distillation device (degree of vacuum 0.093KPa, temperature 150°C) to remove unreacted pentamethylene diisocyanate, thereby producing aliphatic polyisocyanate derivative G.

The aliphatic polyisocyanate derivative G had a pentamethylene diisocyanate concentration of 0.6 mass%, an isocyanate group content of 25.0 mass%, and an allophanate group content relative to 100 mol of the isocyanurate group of 0 mol.

The aliphatic polyisocyanate derivative G contained 20 mol of biuret group relative to 100 mol of PDI used as the ingredient. In other words, the aliphatic polyisocyanate derivative G was a biuret derivative of aliphatic polyisocyanate.

The biuret group content was measured by the method below.

The peak intensity (A) of 1.1 - 1.7ppm corresponding to 6H of methylene chain of PDI and the peak intensity (B) of 8.2ppm corresponding to 2H of biuret were measured under the same conditions in <allophanate group content relative to isocyanurate group>. The molarity of biuret group relative to 100 mol of PDI was calculated based on the following formula.

$$\text{Molarity of biuret group relative to 100 mol of PDI}$$

$$= 100/[\text{peak intensity (A)}/6] \times [\text{peak intensity (B)}/2]$$

Production Example 8 (Production of aliphatic polyisocyanate derivative H)

A four-neck flask equipped with a mixer, thermometer, reflux pipe, and nitrogen inlet tube was charged with 500 parts by mass of HDI, 18 parts by mass of isobutyl alcohol, 0.3 parts by mass of 2,6-di(tert-butyl)-4-methylphenol, and 0.3 parts by mass of tris(tridecyl)phosphite, and reaction was carried out at 80°C for 2 hours.

Then, 0.05 parts by mass of N-(2-hydroxypropyl)-N,N,N-trimethylammonium-2-ethylhexanoate was added as the isocyanurate-forming catalyst. The refraction and isocyanate purity were measured, and the reaction was continued until the predetermined isocyanate group conversion rate was reached. The predetermined isocyanate group conversion rate (10 mass%) was reached after 30 minutes, and thus 0.12 parts by mass of o-toluenesulfonamide was added. The produced reaction solution was allowed to pass through a thin-film distillation device (degree of vacuum 0.093KPa, temperature 150°C) to remove the unreacted HDI, and furthermore, relative to 100 parts by mass of the produced composition, 0.02 parts by mass of o-toluenesulfonamide was added, thereby producing aliphatic polyisocyanate derivative H.

The aliphatic polyisocyanate derivative H had a hexamethylene diisocyanate concentration of 0.5 mass%, an isocyanate group content of 22.2 mass%, and an allophanate group content relative to 100 mol of the isocyanurate group of 200 mol.

<Preparation of polyoxyalkylene diol>

Production Example 9 (Production of Polyol A)

Propylene oxide was subjected to addition polymerization using dipropylene glycol as the initiator, and using potassium hydroxide (KOH) as the catalyst at a temperature of 110°C and a maximum reaction pressure of 0.4MPa until achieving a hydroxyl number of 160 mgKOH/g, thereby preparing crude polyol a.

In a nitrogen atmosphere, to crude polyol "a" heated to 80°C, 8 mass% of ion-exchange water, and 1.02 mol of phosphoric acid (75.2 mass% aqueous solution) relative to 1 mol of potassium in crude polyol "a" were added, and neutralization reaction was carried out at 80°C for 2 hours.

Thereafter, dehydration under reduced pressure was started while increasing the temperature, and when the pressure was 40kPa, 0.3 mass% of adsorbent was added to crude polyol "a". Furthermore, heating and pressure reduction were carried out for 3 hours under conditions of 105°C and 1.33kPa or less. Thereafter, filtration was carried out, thereby collecting polyol A. Polyol A after purification had a hydroxyl number of 162 mgKOH/g, a hydroxyl equivalent of 348, and a CPR of 0; and it was colorless and transparent.

Production Example 10 (Production of Polyol B)

Polyol B was produced in the same manner as in Production Example 9, except that 1.00 mol of phosphoric acid relative to 1 mol of potassium in crude polyol "a" was added. Polyol B after purification had a hydroxyl number of 161 mgKOH/g, a hydroxyl equivalent of 346, and a CPR of 5.4; and it was colorless and transparent.

<Preparation of polyoxyalkylene triol>

Production Example 11 (Production of Polyol C)

Propylene oxide was subjected to addition polymerization using glycerine as the initiator and KOH as the catalyst at a temperature of 110°C and a maximum reaction pressure of 0.4MPa until achieving a hydroxyl number of 561 mgKOH/g, thereby preparing crude polyol "c".

In a nitrogen atmosphere, to crude polyol "c" heated to 80°C, 8 mass% of ion-exchange water, and 1.02 mol of phosphoric acid (75.2 mass% aqueous solution) relative to 1 mol of potassium in crude polyol "c" were added, and neutralization reaction was carried out at 80°C for 2 hours.

Thereafter, dehydration under reduced pressure was started while increasing the temperature, and when the pressure was 40kPa, 0.3 mass% of adsorbent relative to crude polyol "c" was added. Furthermore, heating and pressure reduction were carried out for 3 hours under conditions of 105°C and 1.33kPa or less. Thereafter, filtration was carried out, thereby collecting polyol. Polyol C after purification had a hydroxyl number of 563 mgKOH/g, a hydroxyl equivalent of 100, and a CPR of 0; and it was colorless and transparent.

Production Example 12 (Production of Polyol D)

Polyol D was produced in the same manner as in Production Example 11, except that 1.00 mol of phosphoric acid relative to 1 mol of potassium in crude polyol "c" was added. Polyol D after purification had an OHV of 565 mgKOH/g, a hydroxyl equivalent of 99.6, and a CPR of 5.2; and it was colorless and transparent.

3. Preparation of Examples and Comparative Examples

Example 1 (Production of polyurethane resin)

25 parts by mass of D-700 and 75 parts by mass of T-300 were homogenously mixed at 50°C, thereby producing a polyol component.

The polyol component had a CPR of 0.1. The T-300(triol) content was 91.3 equivalent% and the D-700(diol) content was 8.7 equivalent% relative to a total amount of the polyol component.

To the polyol component, 0.01 parts by mass of tin octylate and 0.002 parts by mass of BYK A535 (antifoaming agent, manufactured by BYK Japan KK) were added, and homogenously mixed at 50°C.

Then, 6.5 parts by mass of aliphatic polyisocyanate derivative A and 135 parts by mass of aliphatic polyisocyanate derivative B were blended and stirred, thereby producing a polyisocyanate component (aliphatic polyisocyanate derivative composition).

The polyisocyanate component had an allophanate group content relative to 100 mol of the isocyanurate group of 12.3 mol.

Thereafter, the polyisocyanate component and the polyol component were mixed so that the equivalent ratio (NCO/OH) of the isocyanate group in the polyisocyanate component relative to the hydroxyl group of the polyol component was 1.0, and defoaming was carried out under reduced pressure. The mixture was poured into a 2mm metal cast mold and a 10cm silicon cast mold, and heating at 80°C was carried out for 12 hours, thereby causing curing reaction.

The polyurethane resin was produced in this manner.

Examples 2 to 15 and Comparative Examples 1 to 8

Polyurethane resin was produced in the same manner as in Example 1, except that the polyol component and the polyisocyanate component were blended with the parts by mass shown in Table 1 to Table 10.

Example 16 (Production of polyurethane resin)

12.1 parts by mass of Polyol A, 12.9 parts by mass of polyol B, 34.6 parts by mass of polyol C, and 40.4 parts by mass of polyol D were mixed homogenously at 50°C, thereby producing a polyol component.

The polyol component had a CPR of 2.8. Relative to a total amount of the polyol component, the polyol C and polyol D (triol) content was 91.3 equivalent%, and the polyol A and polyol B (diol) content was 8.7 equivalent%.

To the polyol component, 0.01 parts by mass of tin octylate and 0.002 parts by mass of BYK A535 (antifoaming agent, manufactured by BYK Japan KK) were homogenously mixed at 50°C.

Then, 6.5 parts by mass of aliphatic polyisocyanate derivative A and 135 parts by mass of aliphatic polyisocyanate derivative B were blended and stirred, thereby producing a polyisocyanate component.

The polyisocyanate component had an allophanate group content relative to 100 mol of the isocyanurate group of 12.3 mol.

Thereafter, the polyisocyanate component and the polyol component were mixed so that the equivalent ratio (NCO/OH) of the isocyanate group in the polyisocyanate component relative to the hydroxyl group of the polyol component was 1.0, and defoaming was carried out under reduced pressure. The mixture was poured into a 2mm metal cast mold and a 10cm silicon cast mold, and heating at 80°C was carried out for 12 hours, thereby causing curing reaction.

The polyurethane resin was produced in this manner.

Example 17 (Production of polyurethane resin)

8.4 parts by mass of Polyol A, 16.6 parts by mass of polyol B, 23.1 parts by mass of polyol C, and 51.9 parts by mass of polyol D were homogenously mixed at 50°C, thereby producing a polyol component.

The polyol component had a CPR of 3.6. Relative to a total amount of the polyol component, the polyol C and polyol D (triol) content was 91.3 equivalent%, and the polyol A and polyol B (diol) content was 8.7 equivalent%.

To the polyol component, 0.01 parts by mass of tin octylate, and 0.002 parts by mass of BYK A535 (antifoaming agent, manufactured by BYK Japan KK) were homogenously mixed at 50°C.

Then, 6.5 parts by mass of aliphatic polyisocyanate derivative A and 135 parts by mass of aliphatic polyisocyanate derivative B were blended and stirred, thereby producing a polyisocyanate component.

The polyisocyanate component had an allophanate group content relative to 100 mol of the isocyanurate group of 12.3 mol.

Thereafter, the polyisocyanate component and the polyol component were mixed so that the equivalent ratio (NCO/OH) of the isocyanate group in the polyisocyanate component relative to the hydroxyl group of the polyol component was 1.0, and defoaming was carried out under reduced pressure. The mixture was poured into a 2mm metal cast mold and a 10cm silicon cast mold, and heating at 80°C was carried out for 12 hours, thereby causing curing reaction.

The polyurethane resin was produced in this manner.

Example 18 (Production of polyurethane resin)

25 parts by mass of D-700 and 75 parts by mass of T-300 were homogeneously mixed at 50°C, thereby producing a polyol component.

The polyol component had a CPR of 0.1. Relative to a total amount of the polyol component, the T-300 (triol) content was 91.3 equivalent%, and the D-700 (diol) content was 8.7 equivalent%.

To the polyol component, 0.025 parts by mass of tin octylate and 0.002 parts by mass of BYK A535 (antifoaming agent, manufactured by BYK Japan KK) were homogenously mixed at 50°C.

For the polyisocyanate component, aliphatic polyisocyanate derivative C (an allophanate group content relative to 100 mol of the isocyanurate group of 55 mol) was used.

Then, the polyisocyanate component and the polyol component were blended so that the equivalent ratio (NCO/OH) of the isocyanate group in the polyisocyanate component relative to the hydroxyl group of the polyol component was 1.0 and that the total amount of the mixture liquid was 1000 parts by mass, and defoaming was carried out under reduced pressure. The mixture was poured into a silicon mold, and heating was carried out at 50°C for 20 hours, thereby causing curing reaction. The maximum internal temperature was 60°C.

The transparent polyurethane resin was produced in this manner.

Example 19 (Production of polyurethane resin)

25 parts by mass of D-700 and 75 parts by mass of T-300 were homogeneously mixed at 50°C, thereby producing a polyol component.

The polyol component had a CPR of 0.1. Relative to a total amount of the polyol component, the T-300 (triol) content was 91.3 equivalent% and the D-700 (diol) content was 8.7 equivalent%.

To the polyol component, 0.05 parts by mass of tin octylate and 0.002 parts by mass of BYK A535 (antifoaming agent, manufactured by BYK Japan KK) were homogenously mixed at 50°C.

For the polyisocyanate component, aliphatic polyisocyanate derivative C (an allophanate group content relative to 100 mol of the isocyanurate group of 55 mol) was used.

Then, the polyisocyanate component and the polyol component were blended so that the equivalent ratio (NCO/OH) of the isocyanate group in the polyisocyanate component relative to the hydroxyl group of the polyol component was 1.0, and that the total amount of the mixture liquid was 1000 parts by mass, and defoaming was carried out under reduced pressure. The mixture was poured into a silicon mold, and heating was carried out at 50°C for 20 hours, thereby causing curing reaction. The maximum internal temperature was 130°C.

The transparent polyurethane resin was produced in this manner.

Example 20 (Production of polyurethane resin)

25 parts by mass of D-700 and 75 parts by mass of T-300 were homogeneously mixed at 50°C, thereby producing a polyol component.

The polyol component had a CPR of 0.1. Relative to a total amount of the polyol component, the T-300 (triol) content was 91.3 equivalent% and the D-700 (diol) content was 8.7 equivalent%.

To the polyol component, 0.05 parts by mass of tin octylate, and 0.002 parts by mass of BYK A535 (antifoaming agent, manufactured by BYK Japan KK) were homogenously mixed at 50°C.

For the polyisocyanate component, aliphatic polyisocyanate derivative C (an allophanate group content relative to 100 mol of the isocyanurate group of 55 mol) was used.

Then, the polyisocyanate component and the polyol component were blended so that the equivalent ratio (NCO/OH) of the isocyanate group in the polyisocyanate component relative to the hydroxyl group of the polyol component was 1.0, and that the total amount of the mixture liquid was 1000 parts by mass, and defoaming was carried out under reduced pressure. The mixture was poured into a silicon mold, and heating was carried out at room temperature for 20 hours, thereby causing curing reaction. The maximum internal temperature was 80°C.

The transparent polyurethane resin was produced in this manner.

Example 21 (Production of polyurethane resin)

30.0 parts by mass of P-510, 70.0 parts by mass of T-300, and 0.2 parts by mass of IRGANOX 245 (hindered phenol antioxidant, manufactured by BASF Japan) were homogeneously mixed at 50°C, thereby producing a polyol component.

Then, to the polyol component, 0.01 parts by mass of K-Kat XK-627 (urethane-forming catalyst, Manufactured by King Industries) and 0.002 parts by mass of BYK A535 (antifoaming agent, manufactured by BYK Japan KK) were homogenously mixed at 50°C.

Aliphatic polyisocyanate derivative C was prepared as the polyisocyanate component.

Thereafter, the polyisocyanate component and the polyol component were mixed so that the equivalent ratio (NCO/OH) of the isocyanate group in the polyisocyanate component relative to the hydroxyl group of the polyol component was 1.0, and defoaming was carried out under reduced pressure. The mixture was poured into a 2mm metal cast mold and a 10cm silicon cast mold, and heating at 80°C was carried out for 12 hours, thereby causing curing reaction.

The polyurethane resin was produced in this manner.

The surface of the polyurethane resin was molded in conformity with the internal surface of the silicon mold when the silicon cast mold was used.

Examples 22 to 36

Polyurethane resin was produced in the same manner as in Example 21, except that the polyol component and the polyisocyanate component were blended by parts by mass shown in Table 3 and Table 4.

Example 37 (Production of polyurethane resin)

25 parts by mass of D-400, 30 parts by mass of P-510, 45 parts by mass of T-300, and 0.2 parts by mass of IRGANOX245 were homogenously mixed at 50°C, thereby producing a polyol component.

Then, to the polyol component, 0.01 parts by mass of tin octylate (urethane-forming catalyst) and 0.002 parts by mass of BYK A535 (antifoaming agent, manufactured by BYK Japan KK) were homogenously mixed at 50°C.

Aliphatic polyisocyanate derivative C was prepared as the polyisocyanate component.

Thereafter, the polyisocyanate component and the polyol component were mixed so that the equivalent ratio (NCO/OH) of the isocyanate group in the polyisocyanate component relative to the hydroxyl group of the polyol component was 1.0, and defoaming was carried out under reduced pressure. The mixture was poured into a 2mm metal cast mold and a 10cm silicon cast mold, and heating at 80°C was carried out for 12 hours, thereby causing curing reaction.

The polyurethane resin was produced in this manner.

On the surface of polyurethane resin produced by using the silicon cast mold, sinking was observed. It was confirmed that the polyurethane resin had depressions and bumps without having the form of the internal surface of the silicon mold.

4. Evaluation

<Initial haze (light transmissivity)>

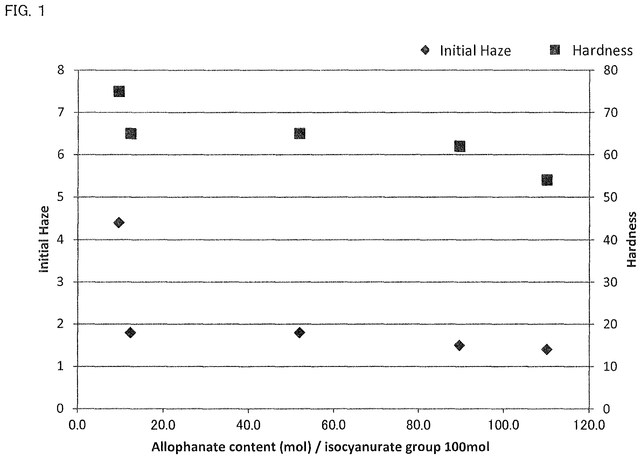

The haze was measured in accordance with JIS K7136 (2000) using Haze Meter (manufactured by Nippon Denshoku Industries Co., Ltd., model: NDH 2000, light source: $D_{65}$) for the 2 mm polyurethane resin produced in Examples and Comparative Examples. The results are shown in Table 1 to Table 10. Referring to Examples 1, 3, and 4, and Comparative Examples 1 and 2, relationship between the ratio of the allophanate group to the isocyanurate group and the haze is shown in FIG. 1.

<Haze after moist and heat resistant test (durability)>

The 2 mm polyurethane resin produced in Examples and Comparative Examples was allowed to stand in a constant temperature (80°C) and constant moisture (90%RH) bath for 72 hours, subjecting them to moist and heat resistant test.

Thereafter, the haze was measured in the same manner as in the initial haze measurement method. The results are shown in Table 1 to Table 10.

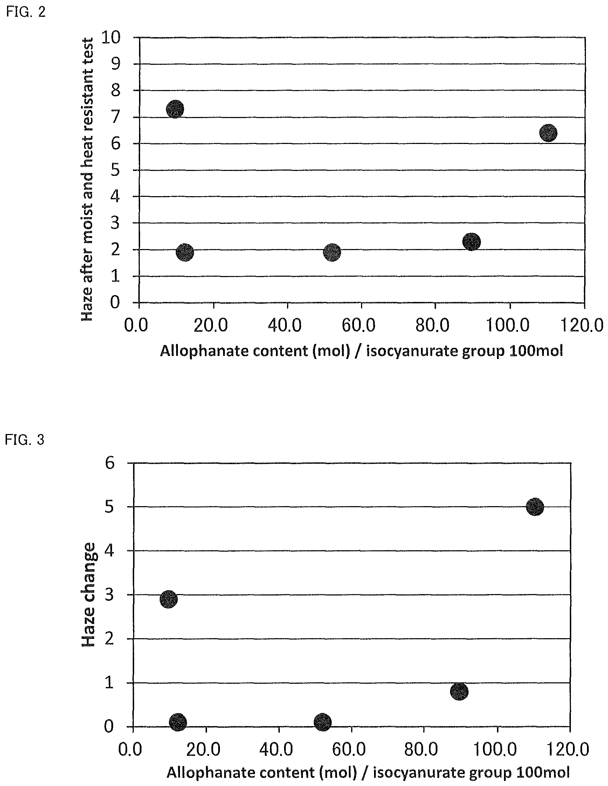

Referring to Examples 1, 3, and 4, and Comparative Examples 1 and 2, relationship between the ratio of the allophanate group to the isocyanurate group and the haze after moist and heat resistant test is shown in FIG. 2.

<Haze change (durability)>

The amount of the changes in the haze before and after moist and heat resistant test are calculated based on the following formula. The results are shown in Table 1 to Table 10.

$$\text{Haze change} = \text{haze after moist and heat resistant test-initial haze}$$

Referring to Examples 1, 3, and 4, and Comparative Examples 1 and 2, relationship between the ratio of the allophanate group to the isocyanurate group and the haze change before and after moist and heat resistant test is shown in FIG. 3.

<Hardness (Unit: D)>

The 10mm polyurethane resin produced in Examples and Comparative Examples was subjected to type D hardness test measurement in accordance with JIS K7312 (1996). The results are shown in Table 1 to Table 10. Referring to Examples 1, 3, and 4, and Comparative Examples 1 and 2, relationship between the ratio of the allophanate group to the isocyanurate group and the hardness is shown in FIG. 1.

<Strength at break (Unit:MPa)>

The polyurethane resin produced with 2mm mold was punched out with a dumbbell of JIS-3. Then, using a tensile tester (manufactured by A&D Company, Limited, model: RTG-1310), tensile test was carried out under conditions of the following: atmosphere of 23°C and relative humidity of 55%, tensile speed 100mm/min, distance between chucks 20mm. In this manner, Strength at break was measured.

<Elongation at break (Unit:%)>

The elongation at break measured in tensile test for Strength at break is regarded as Elongation at break.

<Strength at tear (Unit:N/mm)>

The polyurethane resin produced in a 2mm mold was punched out with a dumbbell of JIS-B. Then, tensile test was carried out with the same conditions for Strength at break, thereby measuring Strength at tear.

<Sinking>

The projections and depressions on the surface of the polyurethane resin produced with a silicon cast mold were regarded as sinking. Evaluation was made based on the following criteria.

    5: No sinking occurred
    4: 1% or more and less than 25% sinking occurred
    3: 25% or more and less than 50% sinking occurred
    2: 50% or more and less than 75% sinking occurred
    1: 75% or more and 100% or less sinking occurred

<Tears and cracks>

When the polyurethane resin produced with a 2mm metal cast mold was removed from the mold, those polyurethane resins generated no tears and cracks were evaluated as Good, and those polyurethane resins generated tears and cracks were evaluated as BAD.

[Table 1]

| No. | | | Ex.1 | Ex.2 | Ex.3 | Ex.4 | Ex.5 |
|---|---|---|---|---|---|---|---|
| Mixing formulation (parts by mass) | Polyol component | D-700 | 25 | 25 | 25 | 25 | 25 |
| | | D-400 | - | - | - | - | - |
| | | D-1000 | - | - | - | - | - |
| | | D-1500 | - | - | - | - | - |
| | | P-510 | - | - | - | - | - |
| | | Polyol A | - | - | - | - | - |
| | | Polyol B | - | - | - | - | - |
| | | T-300 | 75.0 | 75.0 | 75.0 | 75.0 | 75.0 |
| | | T-700 | - | - | - | - | - |
| | | T-1500 | - | - | - | - | - |
| | | T-2000 | - | - | - | - | - |
| | | F-510 | - | - | - | - | - |
| | | Dipropylene glycol | - | - | - | - | - |
| | | Polyol C | - | - | - | - | - |
| | | Polyol D | - | - | - | - | - |
| | | GR-16A | - | - | - | - | - |
| | | PTG-1000SN | - | - | - | - | - |
| | | 6PN | - | - | - | - | - |
| | Polyisocyanate component | Polyisocyanate derivative A | 6.5 | - | 45.0 | 68.2 | 11.8 |
| | | Polyisocyanate derivative B | 135.0 | - | 103 | 84 | 66.5 |
| | | Polyisocyanate derivative C | - | - | - | - | - |
| | | Polyisocyanate derivative D | - | - | - | - | - |
| | | Polyisocyanate derivative E | - | 6.3 | - | - | - |
| | | Polyisocyanate derivative F | - | 148.0 | - | - | - |
| | | Polyisocyanate derivative G | - | - | - | - | 64.0 |
| | | Polyisocyanate derivative H | - | - | - | - | - |
| | | PDI | - | - | - | - | - |
| Allophanate content (mol) /Isocyanurate group 100 mol | | | 12.3 | 12.3 | 52.0 | 89.6 | 25.6 |
| Triol equivalent% | | | 91.3 | 91.3 | 91.3 | 91.3 | 91.3 |
| Diol equivalent% | | | 8.7 | 8.7 | 8.7 | 8.7 | 8.7 |
| Ester equivalent% | | | 0.0 | 0.0 | 0.0 | 0.0 | 0.0 |
| Average functional group of polyol component | | | 2.9 | 2.9 | 2.9 | 2.9 | 2.9 |
| Equivalent ratio R (NCO/OH) | | | 1.0 | 1.0 | 1.0 | 1.0 | 1.0 |
| Evaluation | | Initial haze | 1.8 | 2.4 | 1.8 | 1.5 | 1.4 |
| | | Haze after moist and heat resistant test | 1.9 | 6.9 | 1.9 | 2.3 | 3.7 |
| | | Haze change | 0.1 | 4.5 | 0.1 | 0.8 | 2.3 |
| | | Hardness | 65 | 52 | 65 | 62 | 56 |
| | | Strength at break (MPa) | 22 | 13 | 20 | 19 | 15 |
| | | Elongation at break (%) | 98 | 88 | 95 | 90 | 95 |
| | | Strength at tear (N/mm) | 40 | 26 | 37 | 35 | 29 |
| | | Sinking | 2 | 2 | 2 | 2 | 2 |
| | | Tears and cracks | GOOD | GOOD | GOOD | GOOD | GOOD |

[Table 2]

| No. | | | Ex.6 | Ex.7 | Ex.8 | Ex.9 |
|---|---|---|---|---|---|---|
| Mixing formulation (parts by mass) | Polyol component | D-700 | - | - | 25 | 25 |
| | | D-400 | 25 | - | - | - |
| | | D-1000 | - | 25 | - | - |
| | | D-1500 | - | - | - | - |
| | | P-510 | - | - | - | - |
| | | Polyol A | - | - | - | - |
| | | Polyol B | - | - | - | - |
| | | T-300 | 75.0 | 75.0 | - | - |
| | | T-700 | - | - | 75 | - |
| | | T-1500 | - | - | - | 75 |
| | | T-2000 | - | - | - | - |
| | | F-510 | - | - | - | - |
| | | Dipropylene glycol | - | - | - | - |
| | | Polyol C | - | - | - | - |
| | | Polyol D | - | - | - | - |
| | | GR-16A | - | - | - | - |
| | | PTG-1000SN | - | - | - | - |
| | | 6PN | - | - | - | - |
| | Polyisocyanate component | Polyisocyanate derivative A | 7.0 | 6.3 | 3.0 | 1.7 |
| | | Polyisocyanate derivative B | 145.0 | 132.0 | 62.3 | 35.8 |
| | | Polyisocyanate derivative C | - | - | - | - |
| | | Polyisocyanate derivative D | - | - | - | - |
| | | Polyisocyanate derivative E | - | - | - | - |
| | | Polyisocyanate derivative F | - | - | - | - |
| | | Polyisocyanate derivative G | - | - | - | - |
| | | Polyisocyanate derivative H | - | - | - | - |
| | | PDI | - | - | - | - |
| Allophanate content (mol) /Isocyanurate group 100 mol | | | 12.3 | 12.3 | 12.3 | 12.3 |
| Triol equivalent% | | | 85.7 | 93.8 | 81.4 | 67.7 |
| Diol equivalent% | | | 14.3 | 6.3 | 18.6 | 32.3 |
| Ester equivalent% | | | 0.0 | 0.0 | 0.0 | 0.0 |
| Average functional group of polyol component | | | 2.9 | 2.9 | 2.8 | 2.7 |
| Equivalent ratio R (NCO/OH) | | | 1.0 | 1.0 | 1.0 | 1.0 |
| Evaluation | | Initial haze | 2.3 | 1.8 | 1.7 | 2.1 |
| | | Haze after moist and heat resistant test | 2.5 | 2.1 | 2 | 2.4 |
| | | Haze change | 0.2 | 0.3 | 0.3 | 0.3 |
| | | Hardness | 68 | 62 | 63 | 61 |
| | | Strength at break (MPa) | 25 | 20 | 21 | 20 |
| | | Elongation at break (%) | 102 | 99 | 92 | 90 |
| | | Strength at tear (N/mm) | 47 | 39 | 39 | 37 |
| | | Sinking | 2 | 2 | 2 | 2 |
| | | Tears and cracks | GOOD | GOOD | GOOD | GOOD |

[Table 3]

| No. | | | Ex.10 | Ex.11 | Ex.12 | Ex.13 |
|---|---|---|---|---|---|---|
| Mixing formulation (parts by mass) | Polyol component | D-700 | 25 | 25 | 24.3 | 25 |
| | | D-400 | - | - | - | - |
| | | D-1000 | - | - | - | - |
| | | D-1500 | - | - | - | - |
| | | P-510 | - | - | - | - |
| | | Polyol A | - | - | - | - |
| | | Polyol B | - | - | - | - |
| | | T-300 | 75.0 | 75.0 | 72.8 | 75.0 |
| | | T-700 | - | - | - | - |
| | | T-1500 | - | - | - | - |
| | | T-2000 | - | - | - | - |
| | | F-510 | - | - | - | - |
| | | Dipropylene glycol | - | - | 3 | - |
| | | Polyol C | - | - | - | - |
| | | Polyol D | - | - | - | - |
| | | GR-16A | - | - | - | - |
| | | PTG-1000SN | - | - | - | - |
| | | 6PN | - | - | - | - |
| | Polyisocyanate component | Polyisocyanate derivative A | - | - | 6.6 | 6.0 |
| | | Polyisocyanate derivative B | - | - | 139.0 | 124.6 |
| | | Polyisocyanate derivative C | 146 | - | - | - |
| | | Polyisocyanate derivative D | - | 152 | - | - |
| | | Polyisocyanate derivative E | - | - | - | - |
| | | Polyisocyanate derivative F | - | - | - | - |
| | | Polyisocyanate derivative G | - | - | - | - |
| | | Polyisocyanate derivative H | - | - | - | - |
| | | PDI | - | - | - | 5 |
| Allophanate content (mol) /Isocyanurate group 100 mol | | | 54.7 | 41.8 | 12.3 | 12.3 |
| Triol equivalent% | | | 91.3 | 91.3 | 86.5 | 91.3 |
| Diol equivalent% | | | 8.7 | 8.7 | 8.2 | 8.7 |
| Ester equivalent% | | | 0.0 | 0.0 | 0.0 | 0.0 |
| Average functional group of polyol component | | | 2.9 | 2.9 | 2.9 | 2.9 |
| Equivalent ratio R (NCO/OH) | | | 1.0 | 1.0 | 1.0 | 1.0 |
| Evaluation | | Initial haze | 1.5 | 1.6 | 2.0 | 1.6 |
| | | Haze after moist and heat resistant test | 1.7 | 1.9 | 2.2 | 2.3 |
| | | Haze change | 0.2 | 0.3 | 0.2 | 0.7 |
| | | Hardness | 61 | 63 | 67 | 61 |
| | | Strength at break (MPa) | 19 | 18 | 23 | 19 |
| | | Elongation at break (%) | 89 | 85 | 91 | 81 |
| | | Strength at tear (N/mm) | 35 | 36 | 39 | 35 |
| | | Sinking | 2 | 2 | 2 | 2 |
| | | Tears and cracks | GOOD | GOOD | GOOD | GOOD |

[Table 4]

| No. | | | Ex.14 | Ex.15 | Ex.16 | Ex.17 |
|---|---|---|---|---|---|---|
| Mixing formulation (parts by mass) | Polyol component | D-700 | - | 25 | - | - |
| | | D-400 | - | - | - | - |
| | | D-1000 | - | - | - | - |
| | | D-1500 | - | - | - | - |
| | | P-510 | 25 | - | - | - |
| | | Polyol A | - | - | 12.1 | 8.4 |
| | | Polyol B | - | - | 12.9 | 16.6 |
| | | T-300 | 75.0 | - | - | - |
| | | T-700 | - | - | - | - |
| | | T-1500 | - | - | - | - |
| | | T-2000 | - | - | - | - |
| | | F-510 | - | 75 | - | - |
| | | Dipropylene glycol | - | - | - | - |
| | | Polyol C | - | - | 34.6 | 23.1 |
| | | Polyol D | - | - | 40.4 | 51.9 |
| | | GR-16A | - | - | - | - |
| | | PTG-1000SN | - | - | - | - |
| | | 6PN | - | - | - | - |
| | Polyisocyanate component | Polyisocyanate derivative A | 6.7 | 4.1 | 6.5 | 6.5 |
| | | Polyisocyanate derivative B | 140.0 | 86.0 | 135.0 | 135.0 |
| | | Polyisocyanate derivative C | - | - | - | - |
| | | Polyisocyanate derivative D | - | - | - | - |
| | | Polyisocyanate derivative E | - | - | - | - |
| | | Polyisocyanate derivative F | - | - | - | - |
| | | Polyisocyanate derivative G | - | - | - | - |
| | | Polyisocyanate derivative H | - | - | - | - |
| | | PDI | - | - | - | - |
| Allophanate content (mol) /Isocyanurate group 100 mol | | | 12.3 | 12.3 | 12.3 | 12.3 |
| Triol equivalent% | | | 88.3 | 86.3 | 91.3 | 91.3 |
| Diol equivalent% | | | 11.7 | 13.7 | 8.7 | 8.7 |
| Ester equivalent% | | | 11.7 | 86.3 | 0.0 | 0.0 |
| Average functional group of polyol component | | | 2.9 | 2.9 | 2.9 | 2.9 |
| Equivalent ratio R (NCO/OH) | | | 1.0 | 1.0 | 1.0 | 1.0 |
| Evaluation | | Initial haze | 3.3 | 3.2 | 2.2 | 2.8 |
| | | Haze after moist and heat resistant test | 3.5 | 3.5 | 2.3 | 3 |
| | | Haze change | 0.2 | 0.3 | 0.1 | 0.2 |
| | | Hardness | 73 | 71 | 67 | 68 |
| | | Strength at break (MPa) | 35 | 32 | 25 | 27 |
| | | Elongation at break (%) | 70 | 65 | 100 | 105 |
| | | Strength at tear (N/mm) | 59 | 61 | 45 | 50 |
| | | Sinking | 3 | 4 | 2 | 2 |
| | | Tears and cracks | GOOD | GOOD | GOOD | GOOD |

[Table 5]

| No. | | | Comp. Ex. 1 | Comp. Ex. 2 | Comp. Ex. 3 | Comp. Ex. 4 |
|---|---|---|---|---|---|---|
| Mixing formulation (parts by mass) | Polyol component | D-700 | 25 | 25 | - | 25 |
| | | D-400 | - | - | - | - |
| | | D-1000 | - | - | - | - |
| | | D-1500 | - | - | 25 | - |
| | | P-510 | - | - | - | - |
| | | Polyol A | - | - | - | - |
| | | Polyol B | - | - | - | - |
| | | T-300 | 75.0 | 75.0 | 75.0 | - |
| | | T-700 | - | - | - | - |
| | | T-1500 | - | - | - | - |
| | | T-2000 | - | - | - | 75 |
| | | F-510 | - | - | - | - |
| | | Dipropylene glycol | - | - | - | - |
| | | Polyol C | - | - | - | - |
| | | Polyol D | - | - | - | - |
| | | GR-16A | - | - | - | - |
| | | PTG-1000SN | - | - | - | - |
| | | 6PN | - | - | - | - |
| | Polyisocyanate component | Polyisocyanate derivative A | 3.0 | 77.6 | 6.2 | 1.5 |
| | | Polyisocyanate derivative B | 138 | 76.0 | 128.8 | 31.2 |
| | | Polyisocyanate derivative C | - | - | - | - |
| | | Polyisocyanate derivative D | - | - | - | - |
| | | Polyisocyanate derivative E | - | - | - | - |
| | | Polyisocyanate derivative F | - | - | - | - |
| | | Polyisocyanate derivative G | - | - | - | - |
| | | Polyisocyanate derivative H | - | - | - | - |
| | | PDI | - | - | - | - |
| Allophanate content (mol) /Isocyanurate group 100 mol | | | 9.6 | 110.2 | 12.3 | 12.3 |
| Triol equivalent% | | | 91.3 | 91.3 | 95.7 | 61.4 |
| Diol equivalent% | | | 8.7 | 8.7 | 4.3 | 38.6 |
| Ester equivalent% | | | 0.0 | 0.0 | 0.0 | 0.0 |
| Average functional group of polyol component | | | 2.9 | 2.9 | 3.0 | 2.6 |
| Equivalent ratio R (NCO/OH) | | | 1.0 | 1.0 | 1.0 | 1.0 |
| Evaluation | | Initial haze | 4.4 | 1.4 | 4 | 4.3 |
| | | Haze after moist and heat resistant test | 7.3 | 6.4 | 8.3 | 9.7 |
| | | Haze change | 2.9 | 5.0 | 4.3 | 5.4 |
| | | Hardness | 75 | 54 | 55 | 53 |
| | | Strength at break (MPa) | 23 | 13 | 15 | 14 |
| | | Elongation at break (%) | 55 | 75 | 95 | 92 |
| | | Strength at tear (N/mm) | 35 | 27 | 29 | 27 |
| | | Sinking | 2 | 2 | 2 | 2 |
| | | Tears and cracks | GOOD | GOOD | GOOD | GOOD |

[Table 6]

| No. | | | Comp. Ex. 5 | Comp. Ex. 6 | Comp. Ex. 7 | Comp. Ex. 8 |
|---|---|---|---|---|---|---|
| Mixing formulation (parts by mass) | Polyol component | D-700 | - | - | - | - |
| | | D-400 | - | - | - | - |
| | | D-1000 | - | - | - | - |
| | | D-1500 | - | - | - | - |
| | | P-510 | - | - | - | - |
| | | Polyol A | - | - | - | - |
| | | Polyol B | - | - | - | - |
| | | T-300 | - | - | 75.0 | 75.0 |
| | | T-700 | - | - | - | - |
| | | T-1500 | - | - | - | - |
| | | T-2000 | - | - | - | - |
| | | F-510 | - | - | - | - |
| | | Dipropylene glycol | - | - | - | - |
| | | Polyol C | - | - | - | - |
| | | Polyol D | - | - | - | - |
| | | GR-16A | 100 | 100 | - | - |
| | | PTG-1000SN | - | - | 25 | 25 |
| | | 6PN | - | - | - | - |
| | Polyisocyanate component | Polyisocyanate derivative A | - | 7.8 | - | 6.3 |
| | | Polyisocyanate derivative B | - | 162.0 | - | 132.0 |
| | | Polyisocyanate derivative C | - | - | - | - |
| | | Polyisocyanate derivative D | - | - | - | - |
| | | Polyisocyanate derivative E | - | - | - | - |
| | | Polyisocyanate derivative F | - | - | - | - |
| | | Polyisocyanate derivative G | - | - | - | - |
| | | Polyisocyanate derivative H | 185 | - | 151 | - |
| | | PDI | - | - | - | - |
| Allophanate content (mol) /Isocyanurate group 100 mol | | | 200.0 | 12.3 | 200.0 | 12.3 |
| Triol equivalent% | | | 100.0 | 100.0 | 93.8 | 93.8 |
| Diol equivalent% | | | 0.0 | 0.0 | 6.3 | 6.3 |
| Ester equivalent% | | | 0.0 | 0.0 | 0.0 | 0.0 |
| Average functional group of polyol component | | | 3.8 | 3.8 | 2.9 | 2.9 |
| Equivalent ratio R (NCO/OH) | | | 1.0 | 1.0 | 1.0 | 1.0 |
| Evaluation | | Initial haze | 5.6 | 5.6 | 2.8 | 4.8 |
| | | Haze after moist and heat resistant test | 5.8 | 5.8 | 4.5 | 5.2 |
| | | Haze change | 0.2 | 0.2 | 1.7 | 0.4 |
| | | Hardness | 70 | 70 | 61 | 71 |
| | | Strength at break (MPa) | 20 | 22 | 15 | 26 |
| | | Elongation at break (%) | 65 | 45 | 80 | 105 |
| | | Strength at tear (N/mm) | 35 | 45 | 27 | 50 |
| | | Sinking | 2 | 2 | 2 | 2 |
| | | Tears and cracks | BAD | BAD | GOOD | GOOD |

31

[Table 7]

| No. | | | Ex.21 | Ex.22 | Ex.23 | Ex.24 | Ex.25 |
|---|---|---|---|---|---|---|---|
| Mixing formulation (parts by mass) | Polyol component | D-700 | - | - | - | - | - |
| | | D-400 | - | 5.0 | 15.0 | 25.0 | 40.0 |
| | | D-1000 | - | - | - | - | - |
| | | D-1500 | - | - | - | - | - |
| | | P-510 | 30.0 | 30.0 | 30.0 | 30.0 | 30.0 |
| | | Polyol A | - | - | - | - | - |
| | | Polyol B | - | - | - | - | - |
| | | T-300 | 70.0 | 65.0 | 55.0 | 45.0 | 30.0 |
| | | T-700 | - | - | - | - | - |
| | | T-1500 | - | - | - | - | - |
| | | T-2000 | - | - | - | - | - |
| | | F-510 | - | - | - | - | - |
| | | Dipropylene glycol | - | - | - | - | - |
| | | Polyol C | - | - | - | - | - |
| | | Polyol D | - | - | - | - | - |
| | | GR-16A | - | - | - | - | - |
| | | PTG-1000SN | - | - | - | - | - |
| | | 6PN | - | - | - | - | - |
| | Polyisocyanate component | Polyisocyanate derivative A | - | - | - | - | - |
| | | Polyisocyanate derivative B | - | - | - | - | - |
| | | Polyisocyanate derivative C | 146.6 | 142.1 | 133.2 | 124.2 | 110.8 |
| | | Polyisocyanate derivative D | - | - | - | - | - |
| | | Polyisocyanate derivative E | - | - | - | - | - |
| | | Polyisocyanate derivative F | - | - | - | - | - |
| | | Polyisocyanate derivative G | - | - | - | - | - |
| | | Polyisocyanate derivative H | - | - | - | - | - |
| | | PDI | - | - | - | - | - |
| Allophanate content (mol) /Isocyanurate group 100 mol | | | 54.7 | 54.7 | 54.7 | 54.7 | 54.7 |
| Triol equivalent% | | | 85.4 | 81.8 | 73.8 | 64.8 | 48.4 |
| Diol equivalent% | | | 14.6 | 18.2 | 26.2 | 35.2 | 51.6 |
| Ester equivalent% | | | 14.6 | 15.1 | 16.1 | 17.2 | 19.3 |
| Average functional group of polyol component | | | 2.9 | 2.8 | 2.7 | 2.6 | 2.5 |
| Equivalent ratio R (NCO/OH) | | | 1.0 | 1.0 | 1.0 | 1.0 | 1.0 |
| Evaluation | | Initial haze | 3.5 | 3.5 | 3.3 | 3.0 | 2.9 |
| | | Haze after moist and heat resistant test | 3.7 | 3.7 | 3.5 | 3.2 | 3.1 |
| | | Haze change | 0.2 | 0.2 | 0.2 | 0.2 | 0.2 |
| | | Hardness | 63.0 | 53.0 | 44.0 | 40.0 | 37.0 |
| | | Strength at break (MPa) | 30.0 | 24.0 | 19.0 | 12.0 | 6.4 |
| | | Elongation at break (%) | 76.0 | 102.0 | 106.0 | 109.0 | 99.0 |
| | | Strength at tear (N/mm) | 51.0 | 41.0 | 30.0 | 22.2 | 13.0 |
| | | Sinking | 5 | 5 | 5 | 5 | 5 |
| | | Tears and cracks | GOOD | GOOD | GOOD | GOOD | GOOD |

[Table 8]

| No. | | | Ex.26 | Ex.27 | Ex.28 | Ex.29 |
|---|---|---|---|---|---|---|
| Mixing formulation (parts by mass) | Polyol component | D-700 | - | - | - | - |
| | | D-400 | 50.0 | 68.9 | 60.0 | 65.0 |
| | | D-1000 | - | - | - | - |
| | | D-1500 | - | - | - | - |
| | | P-510 | 30.0 | - | 30.0 | 30.0 |
| | | Polyol A | - | - | - | - |
| | | Polyol B | - | - | - | - |
| | | T-300 | 20.0 | - | 10.0 | 5.0 |
| | | T-700 | - | - | - | - |
| | | T-1500 | - | - | - | - |
| | | T-2000 | - | - | - | - |
| | | F-510 | - | 31.1 | - | - |
| | | Dipropylene glycol | - | - | - | - |
| | | Polyol C | - | - | - | - |
| | | Polyol D | - | - | - | - |
| | | GR-16A | - | - | - | - |
| | | PTG-1000SN | - | - | - | - |
| | | 6PN | - | - | - | - |
| | Polyisocyanate component | Polyisocyanate derivative A | - | - | - | - |
| | | Polyisocyanate derivative B | - | - | - | - |
| | | Polyisocyanate derivative C | 101.9 | 94.9 | 92.9 | 88.5 |
| | | Polyisocyanate derivative D | - | - | - | - |
| | | Polyisocyanate derivative E | - | - | - | - |
| | | Polyisocyanate derivative F | - | - | - | - |
| | | Polyisocyanate derivative G | - | - | - | - |
| | | Polyisocyanate derivative H | - | - | - | - |
| | | PDI | - | - | - | - |
| Allophanate content (mol) /Isocyanurate group 100 mol | | | 54.7 | 54.7 | 54.7 | 54.7 |
| Triol equivalent% | | | 35.1 | 35.1 | 19.2 | 10.1 |
| Diol equivalent% | | | 64.9 | 64.9 | 80.8 | 89.9 |
| Ester equivalent% | | | 21.0 | 35.1 | 23.0 | 24.2 |
| Average functional group of polyol component | | | 2.4 | 2.4 | 2.2 | 2.1 |
| Equivalent ratio R (NCO/OH) | | | 1.0 | 1.0 | 1.0 | 1.0 |
| Evaluation | | Initial haze | 3.1 | 2.8 | 3.1 | 2.9 |
| | | Haze after moist and heat resistant test | 3.3 | 3.0 | 3.7 | 4.5 |
| | | Haze change | 0.2 | 0.2 | 0.6 | 1.6 |
| | | Hardness | 32.0 | 35.0 | 30.0 | 25.0 |
| | | Strength at break (MPa) | 5.7 | 5.9 | 5.1 | 4.0 |
| | | Elongation at break (%) | 95.0 | 100.0 | 91.0 | 102.0 |
| | | Strength at tear (N/mm) | 11.5 | 12.2 | 9.5 | 7.5 |
| | | Sinking | 5 | 5 | 5 | 5 |
| | | Tears and cracks | GOOD | GOOD | GOOD | GOOD |

[Table 9]

| No. | | | Comp. Ex. 9 | Comp. Ex. 10 | Ex.30 | Ex.31 | Ex.32 |
|---|---|---|---|---|---|---|---|
| Mixing formulation (parts by mass) | Polyol component | D-700 | - | - | - | - | - |
| | | D-400 | - | - | - | 10.0 | 30.0 |
| | | D-1000 | - | - | - | - | - |
| | | D-1500 | - | - | - | - | - |
| | | P-510 | - | 100.0 | 90.0 | 80.0 | 60.0 |
| | | Polyol A | - | - | - | - | - |
| | | Polyol B | - | - | - | - | - |
| | | T-300 | - | - | 10.0 | 10.0 | 10.0 |
| | | T-700 | - | - | - | - | - |
| | | T-1500 | - | - | - | - | - |
| | | T-2000 | - | - | - | - | - |
| | | F-510 | 100.0 | - | - | - | - |
| | | Dipropylene glycol | - | - | - | - | - |
| | | Polyol C | - | - | - | - | - |
| | | Polyol D | - | - | - | - | - |
| | | GR-16A | - | - | - | - | - |
| | | PTG-1000SN | - | - | - | - | - |
| | | 6PN | - | - | - | - | - |
| | Polyisocyanate component | Polyisocyanate derivative A | - | - | - | - | - |
| | | Polyisocyanate derivative B | - | - | - | - | - |
| | | Polyisocyanate derivative C | 107.1 | 71.4 | 82.1 | 83.9 | 87.5 |
| | | Polyisocyanate derivative D | - | - | - | - | - |
| | | Polyisocyanate derivative E | - | - | - | - | - |
| | | Polyisocyanate derivative F | - | - | - | - | - |
| | | Polyisocyanate derivative G | - | - | - | - | - |
| | | Polyisocyanate derivative H | - | - | - | - | - |
| | | PDI | - | - | - | - | - |
| Allophanate content (mol) /Isocyanurate group 100 mol | | | 54.7 | 54.7 | 54.7 | 54.7 | 54.7 |
| Triol equivalent% | | | 100.0 | 0.0 | 21.8 | 21.3 | 20.4 |
| Diol equivalent% | | | 0.0 | 100.0 | 78.2 | 78.7 | 79.6 |
| Ester equivalent% | | | 100.0 | 100.0 | 78.2 | 68.0 | 48.9 |
| Average functional group of polyol component | | | 3.0 | 2.0 | 2.2 | 2.2 | 2.2 |
| Equivalent ratio R (NCO/OH) | | | 1.0 | 1.0 | 1.0 | 1.0 | 1.0 |
| Evaluation | | Initial haze | 3.5 | 3.3 | 4.7 | 3.6 | 3.3 |
| | | Haze after moist and heat resistant test | 3.7 | 5.2 | 5.6 | 3.8 | 3.5 |
| | | Haze change | 0.2 | 1.9 | 0.9 | 0.2 | 0.2 |
| | | Hardness | 65.0 | 12.0 | 35.0 | 33.0 | 32.0 |
| | | Strength at break (MPa) | 29.0 | 2.9 | 6.1 | 5.6 | 5.3 |
| | | Elongation at break (%) | 30.0 | 120.0 | 95.0 | 90.0 | 90.0 |
| | | Strength at tear (N/mm) | 34.0 | 4.5 | 12.5 | 12.0 | 10.2 |
| | | Sinking | 4 | 5 | 5 | 5 | 5 |
| | | Tears and cracks | BAD | GOOD | GOOD | GOOD | GOOD |

[Table 10]

| No. | | | Ex.33 | Ex.34 | Ex.35 | Ex.36 | Ex.37 |
|---|---|---|---|---|---|---|---|
| Mixing formulation (parts by mass) | Polyol component | D-700 | - | - | - | - | - |
| | | D-400 | 80.0 | 85.0 | 90.0 | - | 25.0 |
| | | D-1000 | - | - | - | - | - |
| | | D-1500 | - | - | - | - | - |
| | | P-510 | 10.0 | 5.0 | - | 50.0 | 30.0 |
| | | Polyol A | - | - | - | - | - |
| | | Polyol B | - | - | - | - | - |
| | | T-300 | 10.0 | 10.0 | 10.0 | 20.0 | 45.0 |
| | | T-700 | - | - | - | - | - |
| | | T-1500 | - | - | - | - | - |
| | | T-2000 | - | - | - | - | - |
| | | F-510 | - | - | - | - | - |
| | | Dipropylene glycol | - | - | - | - | - |
| | | Polyol C | - | - | - | - | - |
| | | Polyol D | - | - | - | - | - |
| | | GR-16A | - | - | - | - | - |
| | | PTG-1000SN | - | - | - | - | - |
| | | 6PN | - | - | - | 30.0 | - |
| | Polyisocyanate component | Polyisocyanate derivative A | - | - | - | - | - |
| | | Polyisocyanate derivative B | - | - | - | - | - |
| | | Polyisocyanate derivative C | 96.5 | 97.4 | 98.3 | 90.4 | 124.2 |
| | | Polyisocyanate derivative D | - | - | - | - | - |
| | | Polyisocyanate derivative E | - | - | - | - | - |
| | | Polyisocyanate derivative F | - | - | - | - | - |
| | | Polyisocyanate derivative G | - | - | - | - | - |
| | | Polyisocyanate derivative H | - | - | - | - | - |
| | | PDI | - | - | - | - | - |
| Allophanate content (mol) /Isocyanurate group 100 mol | | | 54.7 | 54.7 | 54.7 | 54.7 | 54.7 |
| Triol equivalent% | | | 18.5 | 18.3 | 18.2 | 39.6 | 64.8 |
| Diol equivalent% | | | 81.5 | 81.7 | 81.8 | 60.4 | 35.2 |
| Ester equivalent% | | | 7.4 | 3.7 | 0.0 | 39.5 | 17.2 |
| Average functional group of polyol component | | | 2.2 | 2.2 | 2.2 | 2.4 | 2.6 |
| Equivalent ratio R (NCO/OH) | | | 1.0 | 1.0 | 1.0 | 1.0 | 1.0 |
| Evaluation | | Initial haze | 3.1 | 2.0 | 1.7 | 2.5 | 3.0 |
| | | Haze after moist and heat resistant test | 3.3 | 2.7 | 3.4 | 2.7 | 3.2 |
| | | Haze change | 0.2 | 0.7 | 1.7 | 0.2 | 0.2 |
| | | Hardness | 24.0 | 17.0 | 15.0 | 40.0 | 41.0 |
| | | Strength at break (MPa) | 4.8 | 4.3 | 3.5 | 6.7 | 12.4 |
| | | Elongation at break (%) | 88.0 | 83.0 | 85.0 | 85.0 | 105.0 |
| | | Strength at tear (N/mm) | 9.0 | 8.0 | 6.5 | 14.0 | 23.0 |
| | | Sinking | 5 | 5 | 5 | 5 | 3 |
| | | Tears and cracks | GOOD | GOOD | GOOD | GOOD | GOOD |

## EP 3 492 506 A1

**Claims**

1. Polyurethane resin of a reaction product of a polyisocyanate component and a polyol component,

   wherein
   the polyisocyanate component contains an aliphatic polyisocyanate derivative,
   the aliphatic polyisocyanate derivative has an isocyanurate group and an allophanate group, and an allophanate group content relative to 100 mol of the isocyanurate group of 10 mol or more and 90 mol or less,
   the polyol component contains triol with a hydroxyl number of 100 mgKOH/g or more and 600 mgKOH/g or less and diol with a hydroxyl number of 100 mgKOH/g or more and 300 mgKOH/g or less,
   the triol is polyoxyalkylene triol having an oxyalkylene group with carbon atoms of 2 to 3, and/or polyestertriol that is a reaction product of polybasic acid and/or its alkylester, and polyhydric alcohol,
   the diol is polyoxyalkylene diol having an oxyalkylene group with carbon atoms of 2 to 3, and/or polyesterdiol that is a reaction product of polybasic acid and/or its alkylester, and polyhydric alcohol.

2. The polyurethane resin according to Claim 1, wherein
   the aliphatic polyisocyanate includes pentamethylene diisocyanate.

3. The polyurethane resin according to Claim 1, wherein
   the polyol component has an average functionality of 2.1 or more and 2.9 or less.

4. The polyurethane resin according to Claim 1, wherein
   relative to a total amount of the polyol component, a total of the polyesterdiol content and the polyestertriol content is 5 equivalent% or more and 70 equivalent% or less.

5. A method for producing polyurethane resin, the method comprising the steps of:

   allowing a polyisocyanate component to react with a polyol component,
   wherein the polyisocyanate component contains an aliphatic polyisocyanate derivative,
   the aliphatic polyisocyanate derivative has an isocyanurate group and an allophanate group, and an allophanate group content relative to 100 mol of the isocyanurate group of 10 mol or more and 90 mol or less,
   the polyol component contains triol with a hydroxyl number of 100 mgKOH/g or more and 600 mgKOH/g or less, and diol with a hydroxyl number of 100 mgKOH/g or more and 300 mgKOH/g or less,
   the triol is polyoxyalkylene triol having an oxyalkylene group with carbon atoms of 2 to 3, and/or polyestertriol that is a reaction product of polybasic acid and/or its alkylester, and polyhydric alcohol,
   the diol is polyoxyalkylene diol having an oxyalkylene group with carbon atoms of 2 to 3, and/or polyesterdiol that is a reaction product of polybasic acid and/or its alkylester, and polyhydric alcohol, and
   the equivalent ratio (NCO/OH) of the isocyanate group of the polyisocyanate component relative to the hydroxyl group of the polyol component is 0.9 or more and 1.1 or less.

FIG. 1

FIG. 2

FIG. 3

**EP 3 492 506 A1**

**INTERNATIONAL SEARCH REPORT**

International application No.

PCT/JP2017/027005

A. CLASSIFICATION OF SUBJECT MATTER
C08G18/79(2006.01)i, C08G18/40(2006.01)i, C08G18/42(2006.01)i, C08G18/48(2006.01)i

According to International Patent Classification (IPC) or to both national classification and IPC

B. FIELDS SEARCHED

Minimum documentation searched (classification system followed by classification symbols)
C08G18/79, C08G18/40, C08G18/42, C08G18/48

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2015/060259 A1 (Mitsui Chemicals, Inc.),<br>30 April 2015 (30.04.2015),<br>claims; examples; synthesis examples A3, B3<br>& JP 2016-047911 A     & JP 2016-047910 A<br>& US 2016/0282515 A1<br>claims; synthesis examples A3, B3<br>& US 2016/0237198 A1     & WO 2015/060260 A1<br>& EP 3061778 A1          & EP 3061780 A1<br>& KR 10-2016-0052618 A   & CN 105658693 A<br>& KR 10-2016-0052619 A   & CN 105658694 A | 1–5 |

[X] Further documents are listed in the continuation of Box C.          [ ] See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 October 2017 (18.10.17) | Date of mailing of the international search report<br>31 October 2017 (31.10.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

39

**INTERNATIONAL SEARCH REPORT**

International application No.

PCT/JP2017/027005

| C (Continuation). DOCUMENTS CONSIDERED TO BE RELEVANT | | |
|---|---|---|
| Category* | Citation of document, with indication, where appropriate, of the relevant passages | Relevant to claim No. |
| A | WO 2015/060260 A1 (Mitsui Chemicals, Inc.),<br>30 April 2015 (30.04.2015),<br>claims; examples; synthesis example A3<br>& JP 2016-047910 A     & JP 2016-047911 A<br>& US 2016/0237198 A1<br>claims; synthesis example A3<br>& US 2016/0282515 A1    & WO 2015/060259 A1<br>& EP 3061780 A1          & EP 3061778 A1<br>& KR 10-2016-0052619 A   & CN 105658694 A<br>& KR 10-2016-0052618 A   & CN 105658693 A | 1-5 |
| A | WO 2013/054659 A1 (Sanyu Rec Co., Ltd.),<br>18 April 2013 (18.04.2013),<br>claims; examples<br>& US 2014/0248497 A1<br>claims; examples<br>& EP 2767983 A1          & CN 103858180 A<br>& KR 10-2014-0082773 A   & TW 201326304 A | 1-5 |
| A | JP 2015-089909 A (Dai-Ichi Kogyo Seiyaku Co.,<br>Ltd.),<br>11 May 2015 (11.05.2015),<br>claims; examples<br>& JP 5550161 B1          & WO 2015/068418 A1<br>& CN 105026451 A | 1-5 |
| A | WO 2014/208567 A1 (Asahi Kasei Corp.),<br>31 December 2014 (31.12.2014),<br>claims; examples<br>& US 2016/0369034 A1<br>claims; examples<br>& EP 3015486 A1          & CA 2916047 A<br>& CN 105339408 A         & KR 10-2016-0011209 A | 1-5 |
| P,A | JP 6157709 B1 (Sanyu Rec Co., Ltd.),<br>16 June 2017 (16.06.2017),<br>claims; examples<br>(Family: none) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011012141 A
- JP S61129173 B

- WO 2012121291 A